Europäisches Patentamt

European Patent Office

Office européen des brevets

(11) Numéro de publication : **0 454 556 B1**

## (12) FASCICULE DE BREVET EUROPEEN

(45) Date de publication du fascicule du brevet :
**21.12.94 Bulletin 94/51**

(51) Int. Cl.⁵ : **H04N 7/167, H04N 11/04**

(21) Numéro de dépôt : **91401058.2**

(22) Date de dépôt : **22.04.91**

(54) **Procédé et dispositif d'embrouillage-désembrouillage de données d'images numériques.**

(30) Priorité : **25.04.90 FR 9005269**

(43) Date de publication de la demande :
**30.10.91 Bulletin 91/44**

(45) Mention de la délivrance du brevet :
**21.12.94 Bulletin 94/51**

(84) Etats contractants désignés :
**DE GB IT**

(56) Documents cités :
**EP-A- 0 158 383**
**WO-A-87/02854**
**WO-A-88/10051**

(56) Documents cités :
**SYMPOSIUM RECORD, BROADCAST SES-**
**SIONS, 16TH INTERNATIONAL TV SYMPO-**
**SIUM,Montreux, 17 - 22 juin 1989, pages**
**387-409; K. GROTZ et al.: "Image coding tech-**
**niques for 64 kbit/s channels"**

(73) Titulaire : **Etablissement Public Télédiffusion**
**de France**
**10, rue d'Oradour-sur-Glane**
**F-75015 Paris (FR)**

(72) Inventeur : **Lebrat, François**
**23 Rue de Rungis**
**F-75013 Paris (FR)**

(74) Mandataire : **Fréchède, Michel et al**
**Cabinet Plasseraud**
**84, rue d'Amsterdam**
**F-75009 Paris (FR)**

## Description

L'invention est relative à un procédé et à un dispositif d'embrouillage-désembrouillage de données d'images numériques.

Avec l'apparition récente des techniques de compression et de décompression d'images numériques utilisant, notamment, les algorithmes de transformée en cosinus discrète, TCD, de nouvelles applications et services commerciaux sont à même de se développer pour mettre en oeuvre ces techniques dans le domaine des transmissions numériques (Télévision numérique à réduction de débit ou transport d'images fixes sur les réseaux numériques à intégration de service RNIS) ou même dans le domaine de l'optimisation des supports de stockage de données (bases de données documentaires). A titre d'exemple de récents développements basés sur les techniques de TCD, on peut citer diverses actions de normalisation de systèmes de transmission d'images numériques :
- codage ADCT-ISO d'images photographiques destiné à un service télématique multimédia sur RNIS,
- codecs de réduction (CMTT) pour la transmission de télévision numérique à des débits de 32 à 45 Mbits/s.

Si l'obstacle technique de maintien de la qualité de l'image après codage est présentement levé, la mise en oeuvre commerciale de services associés peut être entravée par des problèmes de protection des droits de l'autorité assurant l'émission des images, celle-ci désirant soit assurer la confidentialité de ces émissions, soit percevoir des redevances d'accès à la réception finale des images.

Ces problèmes de protection de la transmission ou de réservation de l'accès à l'utilisation d'images peuvent être levés à condition de disposer de systèmes d'embrouillage-désembrouillage d'images numériques intervenant de préférence soit sous le contrôle direct des opérateurs maîtres d'ouvrage de l'émission des images, c'est-à-dire avant et après transmission et diffusion, soit sous le contrôle de prestataires de services, maîtres d'oeuvres dans la chaîne de transmission numérique.

Actuellement, plusieurs techniques d'embrouillage d'images sont appliquées dans le domaine de l'émission de signaux de télévision analogique.

Ces techniques, employées à l'émission, nécessiteraient, en vue de leur application aux signaux de télévision numérique, une conversion numérique-analogique avant embrouillage puis une conversion analogique-numérique avant la transmission.

De la même façon, à la réception, il est nécessaire d'opérer une conversion numérique-analogique puis une conversion analogique-numérique pour désembrouiller l'image. En conséquence, sans préjuger de la compatibilité des traitements numériques de compression/décompression d'image utilisés pour la transmission numérique, la qualité de l'image sera ainsi dégradée par les multiples étapes de conversion analogique et numérique.

Les techniques précitées sont donc difficilement applicables à la transmission numérique.

Les techniques précitées, notamment la transposition dans le domaine numérique des techniques d'embrouillage-désembrouillage de télévision, à savoir translation horizontale aléatoire des lignes actives vidéo et D2 MAC/Paquets (rotation du contenu des lignes actives vidéo avec point de coupure aléatoire) est incompatible avec le maintien de la qualité vidéo obtenue, du fait du traitement pour compression de type TCD. En effet, ces techniques visent à détruire la corrélation entre les lignes successives de l'image, alors que l'exploitation de la corrélation entre pixels voisins est la caractéristique de la tranformée par cosinus discrète TCD.

Plus récemment, un processus de permutation de lignes par bloc a été proposé par la demande de brevet français n° 88 00361 déposée au nom de la demanderesse le 14 janvier 1988, et correspondant au document FR-A-26 26 131 publié le 21 Juillet 1989.

Bien que le processus décrit dans la demande précitée concerne les applications relatives aux images de télévision numérique, ce type d'embrouillage-désembrouillage nécessite l'emploi d'une mémoire d'image numérique.

En outre, ce document décrit un processus d'embrouillage-désembrouillage d'images de télévision dans lequel un embrouillage inter-ligne ou inter-bloc, chaque bloc comportant plusieurs lignes, est seul effectué. Ce type d'embrouillage-désembrouillage est relativement facile à percer dans la mesure où la périodicité minimale d'une ligne constitue une base simple d'investigations afin de déterminer la périodicité effective d'embrouillage-désembrouillage utilisée.

Enfin, des restrictions d'utilisation de ce type de processus doivent être prévues pour satisfaire à des conditions particulières de traitements avals de TCD, ces restrictions facilitant notablement le perçage du dispositif d'embrouillage par des tiers non habilités.

La présente invention a pour objet de remédier à l'ensemble des inconvénients précités par la mise en oeuvre d'un procédé et d'un dispositif d'embrouillage-désembrouillage d'images numériques permettant d'utiliser les systèmes de réduction de débit ou de compression d'images fixes basés sur une analyse par blocs

EP 0 454 556 B1

des images, en l'absence de toute dégradation supplémentaire à la qualité vidéo des images.

Un autre objet de la présente invention est, grâce à l'utilisation du procédé et/ou du dispositif objet de l'invention, la mise en oeuvre de systèmes de contrôle d'accès ou de protection des images numériques fixes ou animées, ces systèmes pouvant être mis en oeuvre pour assurer la commercialisation de programmes d'images distribuées par l'intermédiaire de réseaux de transmission numérique.

Un autre objet de la présente invention est enfin la mise en oeuvre d'un procédé et d'un dispositif d'embrouillage-désembrouillage de signaux numériques représentatifs d'images, ce procédé et ce système pouvant être utilisés dans ce cas, soit à l'extérieur de la chaîne de transmission numérique, sous contrôle des opérateurs maîtres d'ouvrage de l'émission , c'est-à-dire avant les points de prise en charge pour transmission et après les points de livraison par les utilisateurs des images numériques, soit dans la chaîne de transmission numérique elle-même, sous contrôle de prestataires de service assurant la transmission en tant que maître d'oeuvre de cette transmission.

Le procédé d'embrouillage-désembrouillage de données d'images numériques, objet de la présente invention, est remarquable en ce que, en vue d'assurer l'embrouillage, celui-ci consiste à soumettre des données à un traitement pour extraire les composantes colorimétriques des pixels constitutifs de l'image puis à constituer ces composantes en blocs b(I,J) de NxN pixels, de façon à engendrer un découpage spatial correspondant de l'image, I désignant un indice de ligne de gauche à droite et J un indice de colonne de haut en bas d'arrangement des blocs dans l'image. Pour chaque bloc NxN ainsi défini, les pixels sont représentés par x(i,j), i désignant un indice de ligne (0 à N-1 de gauche à droite) et j désignant un indice de colonne (0 à N-1 de haut en bas) d'arrangement des pixels dans le bloc. Les pixels et/ou les blocs sont ensuite soumis à un processus de brassage intra-et/ou inter-blocs. Le brassage inter-blocs consiste en un réarrangement arbitraire des blocs de pixels b(I,J) et le brassage intra-blocs consistant en un arrangement arbitraire ou un traitement particulier des pixels x(i,j) de chaque bloc pour obtenir un arrangement embrouillé de blocs et/ou de pixels. Le désembrouillage est effectué par transformation inverse du processus d'embrouillage relativement au réarrangement arbitraire des blocs de pixels et des pixels effectué au processus de brassage.

Le procédé et le dispositif d'embrouillage-désembrouillage objets de la présente invention trouvent application notamment à l'émission à la diffusion et à la transmission de signaux numériques d'images, tels que des signaux d'images de télévision, ainsi qu'à la protection d'images numériques stockées après compression sur supports informatiques, ainsi que dans tout domaine mettant en oeuvre des techniques de compression basées sur une analyse de l'image par blocs (codecs de réduction de débit de TVHD numérique...).

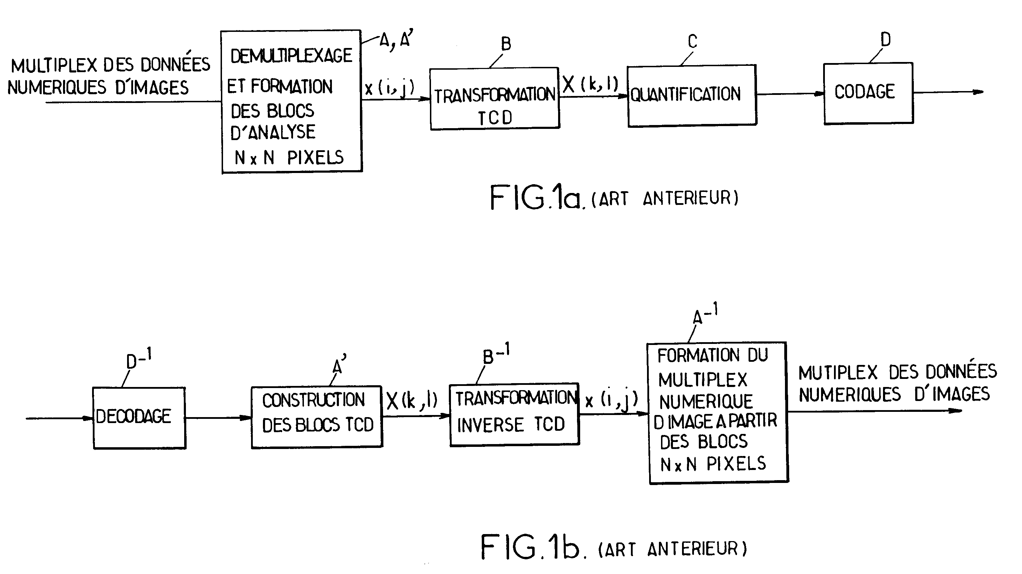

Une description plus détaillée du procédé et du dispositif objets de la présente invention sera maintenant donnée en liaison avec les dessins ci-après dans lesquels, outre les figures 1a, 1b de l'art antérieur relatives aux techniques de compression respectivement décompression d'images numériques par transformée en cosinus discrète TCD. Pour chaque bloc b(I,J) de NxN pixels traités par TCD, les coefficients de TCD sont représentés par X(k,l), k désignant un indice de ligne (0 à N-1 de gauche à droite) et l désignant un indice de colonne (0 à N-1 de haut en bas) d'arrangement des coefficients dans le bloc TCD NxN,

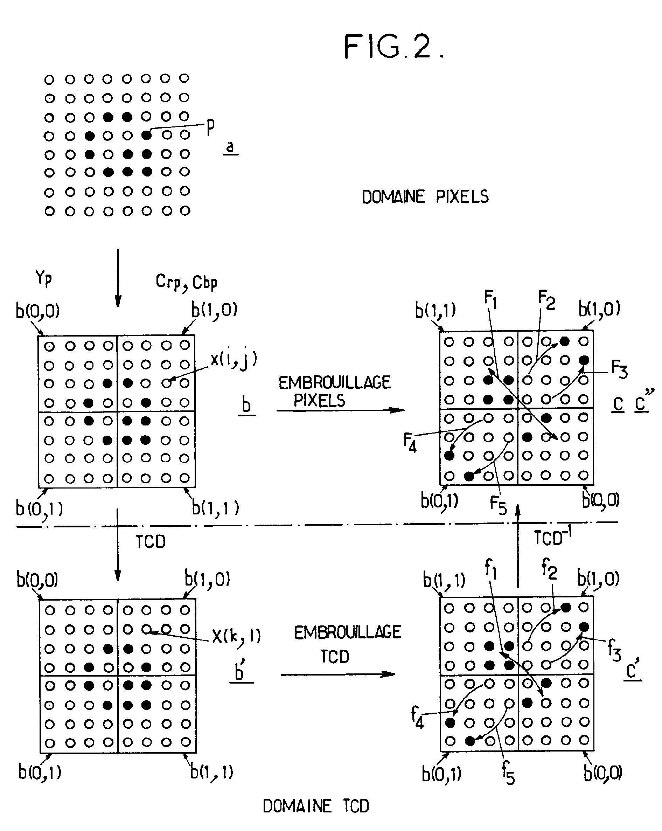

- la figure 2 aux points a, b, c, b', c' et c″ réprésente, de manière illustrative, les étapes de mise en oeuvre du procédé d'embrouillage-désembrouillage en particulier du processus d'embrouillage dans le cas où celui-ci est mis en oeuvre respectivement en l'absence du processus de traitement par transformée en cosinus discrète TCD, postérieurement au processus de traitement par transformée en cosinus discrète TCD,

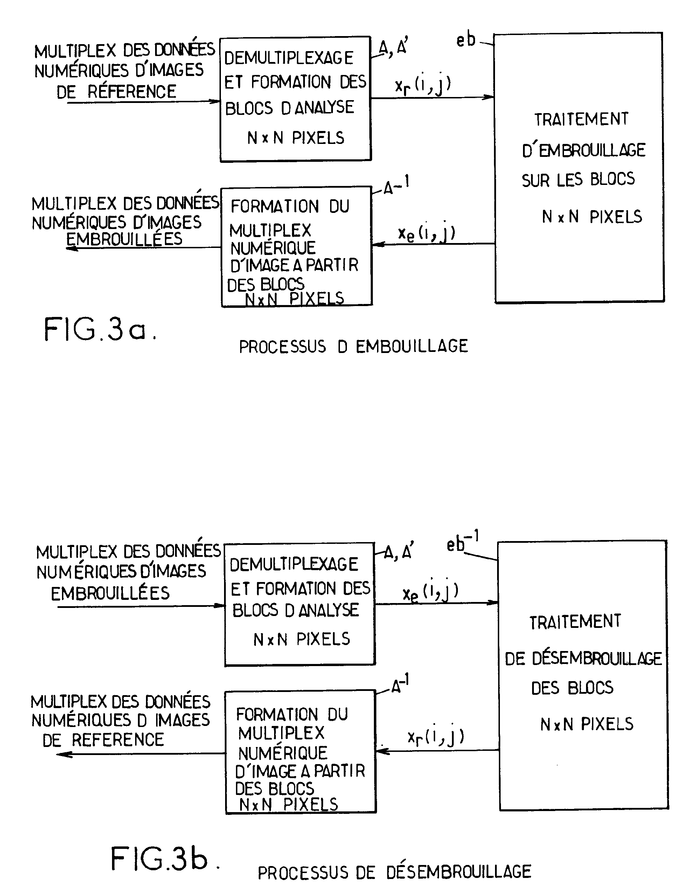

- les figures 3a et 3b représentent un schéma synoptique complet des étapes de mise en oeuvre du procédé objet de l'invention, tant relativement au processus d'embrouillage antérieurement au processus de compression par transformée en cosinus discrète qu'au processus de désembrouillage postérieurement au processus de décompression par transformée inverse en cosinus discrète TCD⁻¹,

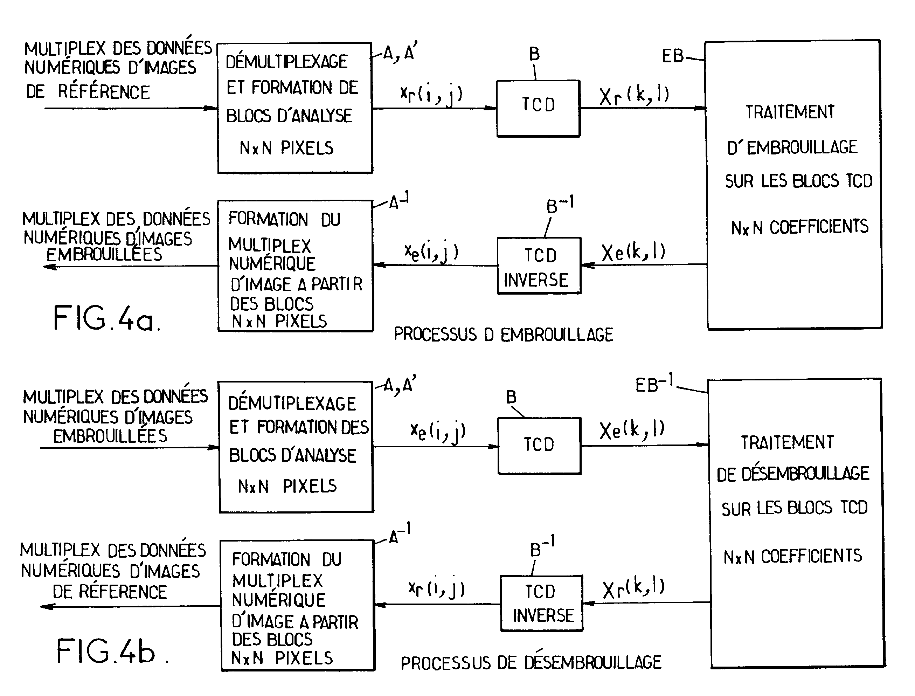

- les figures 4a et 4b représentent un schéma synoptique complet des étapes de mise en oeuvre du procédé objet de l'invention, tant relativement au processus d'embrouillage postérieurement au processus de compression par transformée en cosinus discrète qu'au processus de désembrouillage antérieurement au processus de décompression par transformée inverse en cosinus discrète TCD⁻¹,

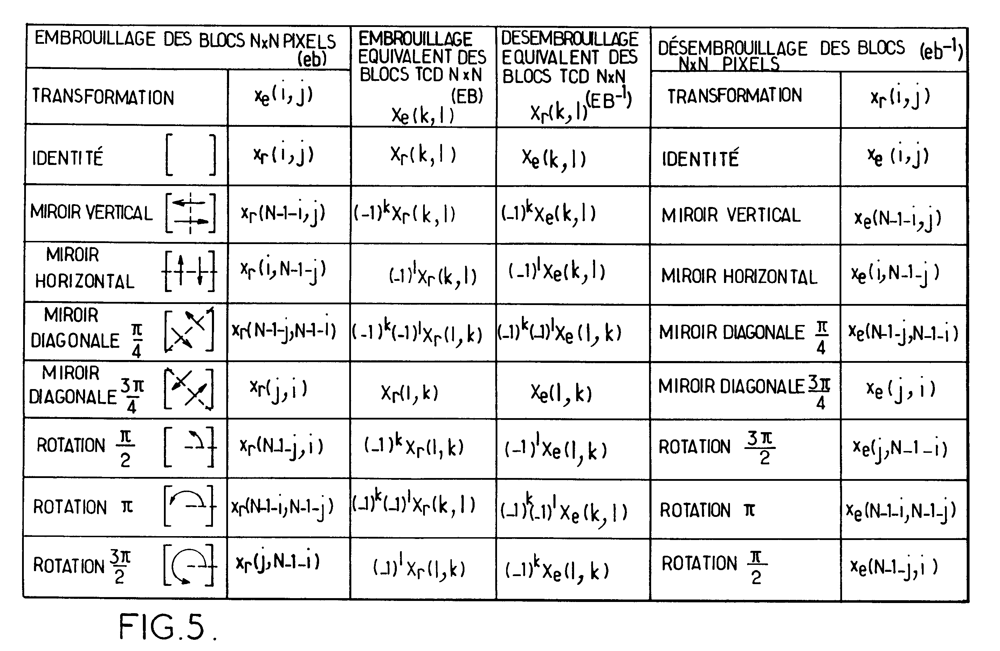

- la figure 5 représente un tableau synoptique, d'une part, des différentes opérations d'embrouillage intra-blocs des NxN pixels x(i,j) et d'autre part, des opérations d'embrouillage équivalentes des blocs de coefficients TCD, X (k,l),

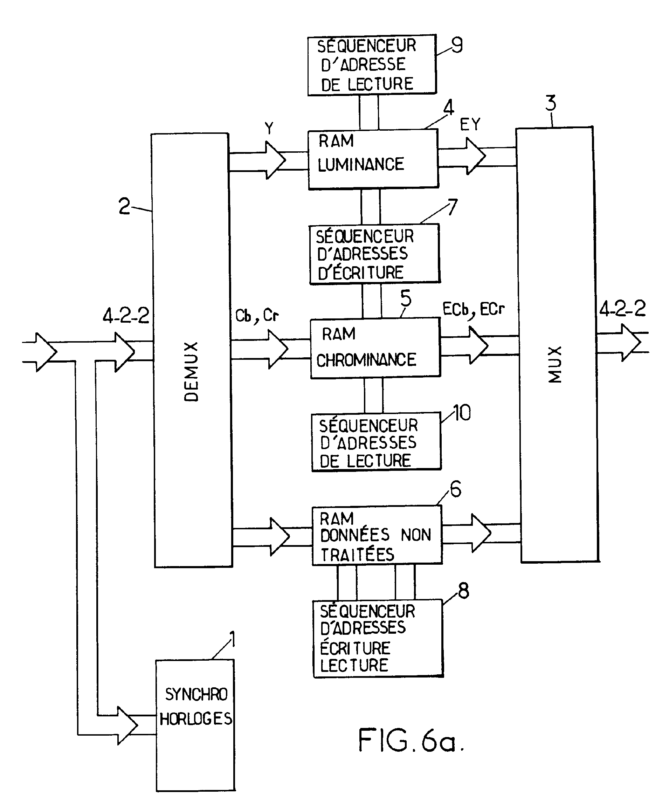

- la figure 6a représente un schéma illustratif d'un mode de réalisation avantageux non limitatif d'un dispositif permettant d'assurer le processus d'embrouillage respectivement de désembrouillage des données d'image, conformément au procédé objet de l'invention, le processus d'embrouillage étant mis en oeuvre en l'absence du ou antérieurement au traitement de compression par TCD, alors que le processus de désembrouillage est mis en oeuvre en l'absence du ou postérieurement au traitement de décompression par TCD⁻¹,

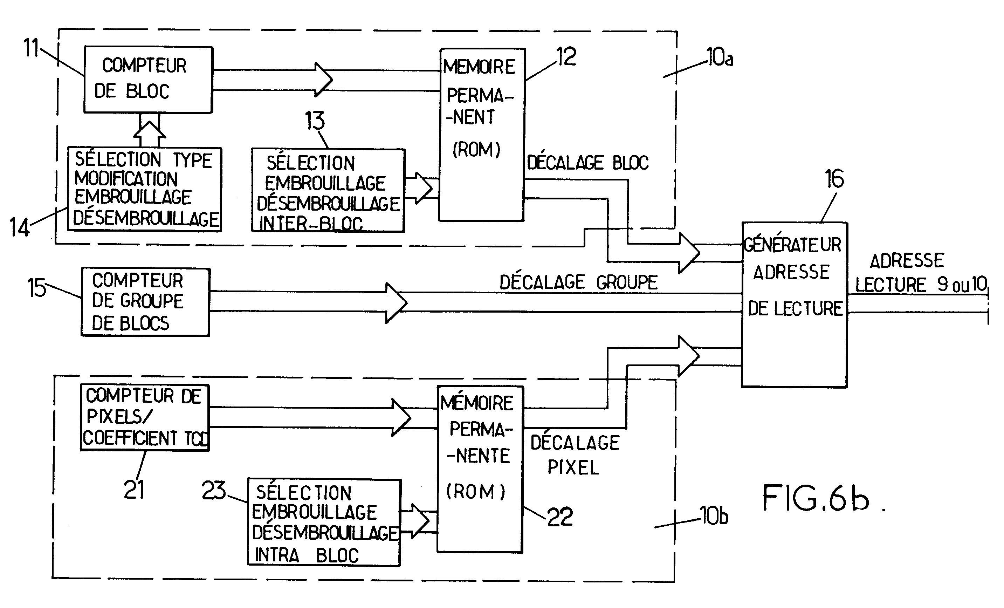

- la figure 6b représente un mode de réalisation particulier non limitatif avantageux d'éléments constitutifs du dispositif représenté en figure 6a,

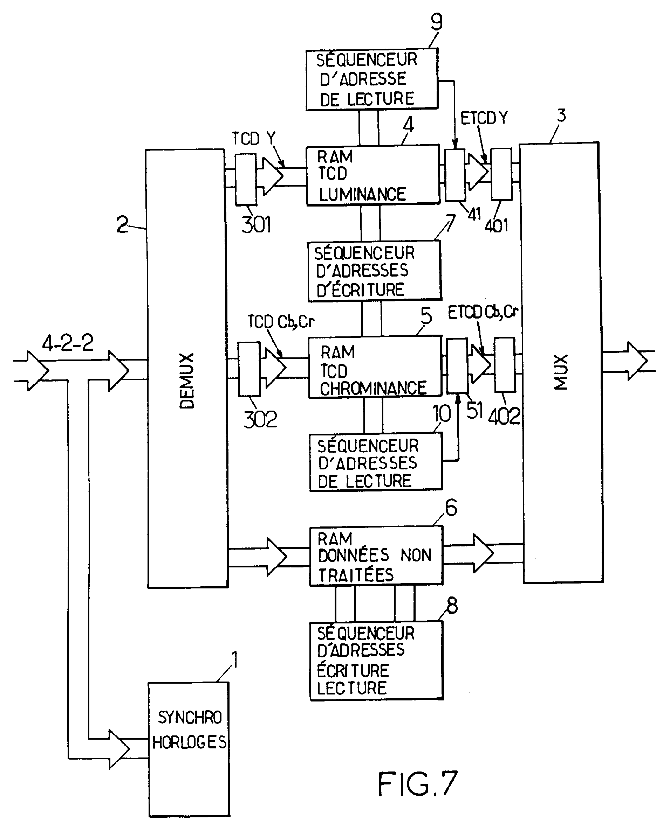

- la figure 7 représente un schéma illustratif d'un mode de réalisation avantageux non limitatif d'un dispositif permettant d'assurer le processus d'embrouillage respectivement de désembrouillage des données d'image, conformément au procédé objet de l'invention, le processus d'embrouillage étant mis en oeuvre sur les blocs de coefficients TCD et le processus de désembrouillage étant mis en oeuvre sur les blocs de coefficients TCD embrouillés, antérieurement au traitement de décompression par TCD$^{-1}$.

Préalablement à la description du procédé et du dispositif d'embrouillage-désembrouillage de données d'images numériques objets de la présente invention, un rappel des étapes essentielles d'un traitement de compression-décompression d'images par transformée en cosinus discrète respectivement transformée en cosinus discrète inverse sera donnée en liaison avec les figures 1a et 1b.

De manière non limitative, le traitement de compression-décompression par tranformée en cosinus discrète et par transformée en cosinus discrète inverse TCD , TCD$^{-1}$ sera donnée dans le cas de la transmission par multiplex de données numériques d'images, telles que des images de télévision par exemple.

Sur la figure 1a, on a représenté le schéma illustratif d'un synoptique de compression d'images numériques par TCD. Le multiplex des données numériques d'images, afin d'assurer le traitement de compression, est soumis aux étapes principales consistant en un démultiplexage des données numériques d'images A pour constituer, avec chaque composante, des blocs carrés b(I,J) de NxN pixels correspondant à un découpage spatial de l'image. La formation des blocs d'analyse précitée est connue de l'état de la technique et est notée A′ sur la figure 1a. Les pixels des blocs NxN pixels sont notés x(i,j) où :
- i est un indice de ligne, i variant de O à N-1 de gauche à droite,
- j est un indice de colonne, j variant de O à N-1 de haut en bas.

Les pixels x(i,j) sont ensuite soumis en B à une transformation en cosinus discrète TCD appliquée à chaque bloc de NxN pixels x(i,j). La transformation TCD délivre des blocs de NxN coefficients TCD X(k,l) où :
- k désigne un indice de ligne de O à N-1 de gauche à droite,
- l désigne un indice de colonne de O à N-1 de haut en bas.

Les blocs de coefficients TCD sont alors soumis en C à un processus de quantification, la loi de quantification utilisée dépendant du facteur de compression désiré ainsi que du type de composante du signal traité, composante de luminance Y ou composante de chrominance Cr,Cb dans le cas d'un signal d'images numériques de télévision, comme mentionné précédemment.

Les coefficients TCD quantifiés délivrés suite à l'étape C sont alors soumis à l'étape de codage en D, de façon à reconstituer un multiplex numérique d'images après compression et à assurer ainsi la transmission des données numériques d'images après compression, cette compression étant de nature à assurer une protection contre les erreurs de transmission pendant la transmission numérique précitée et à éliminer la redondance d'information.

Cette transmission ayant été effectuée, à la réception, le multiplex numérique reconstitué précédemment mentionné est tout d'abord soumis à une étape de décodage D$^{-1}$ suivie d'une étape de construction des blocs TCD, cette étape étant notée A′ sur la figure 1b par analogie avec l'étape A′ de la figure 1a. Cette étape permet de reconstituer en bloc de coefficients TCD X(k,l) les coefficients TCD précités. Ces derniers sont alors soumis à une étape de transformation TCD inverse B$^{-1}$, laquelle permet de restituer les blocs correspondants de pixels x(i,j) à partir des blocs de coefficients TCD. Les blocs de pixels x(i,j) sont alors soumis à une étape de formation d'un multiplex numérique d'images à partir des blocs de NxN pixels, cette nouvelle étape étant notée A$^{-1}$ sur la figure 1b et permettant de former le multiplex des données numériques d'images, lesquelles seront alors délivrées pour utilisation.

Bien entendu, les étapes de décompression des données d'images telles que représentées en figure 1b correspondent aux traitements inverses des étapes de compression d'images telles que représentées en figure 1a.

Pour une description détaillée des propriétés des transformées en cosinus discrètes, on pourra avantageusement se rapporter au document 11/733-F du 24 Octobre 1989 annexes II , III et IV publiées par la commission d'étude 11 du CCIR (Comité Consultatif International des Radiocommunications).

En ce qui concerne les propriétés des transformées en cosinus discrètes, on rappellera simplement qu'à tout ensemble de pixels, constitutif d'un bloc NxN pixels, chaque pixel étant codé par exemple en luminance et en chrominance, une transformée TCD permet de faire correspondre un nombre identique de coefficients TCD en luminance et en chrominance, les coefficients TCD étant sensiblement répartis dans la bande de fréquence utile du signal numérique d'images et représentatifs des niveaux d'énergie en fonction des composantes de fréquence précitées.

Le processus de quantification intervenant après la transformation TCD permet alors d'effectuer la compression d'image correspondante en fonction notamment des paramètres de réduction de débit souhaités pour la transmission.

Une description plus détaillée du procédé d'embrouillage-désembrouillage de données d'images numériques, objet de la présente invention, sera maintenant donnée en liaison avec la figure 2.

Conformément à la figure précitée, afin d'assurer l'embrouillage, les données représentées symboliquement par des pixels p en a, ces pixels étant réputés constituer, par exemple, une image de télévision ou autre, sont soumises à un traitement pour extraire les composantes colorimétriques des pixels constitutifs de l'image. Au point a de la figure 2, on notera que l'on a représenté par un ensemble de taches circulaires, les pixels sensés représenter par exemple la lettre Q. En outre, le traitement permettant d'extraire les composantes colorimétriques des pixels constitutifs de l'image, permet dans le cas d'une image de type télévision numérique d'extraire les composantes de luminance Yp et de chrominance Crp,Cbp de chacun des pixels considérés. Bien entendu ce type de traitement est un traitement classique et ne sera pas décrit en détail pour illustrer simplement le procédé d'embrouillage des structures d'échantillonnage en luminance et en chrominance de la figure 2 sont identiques, les traitements étant de toute façon effectués indépendamment sur chaque composante dans le cas général.

L'étape a précitée est en outre suivie d'une étape b consistant à constituer les composantes précitées en blocs b(I,J) d'un nombre déterminé de pixels, NxN pixels. Bien entendu, au point b de la figure 2, on a représenté quatre blocs, lesquels permettent de distinguer la lettre Q précédemment représentée en a. Les composantes colorimétriques précitées, notamment de luminance et de chrominance, sont alors constituées en blocs de façon à engendrer le découpage spatial correspondant de l'image, les indices I et J des blocs désignant respectivement un indice de ligne et un indice de colonne d'arrangement des blocs dans l'image.

Puis, ainsi que représenté au point c de la figure 2, les pixels x(i,j) et/ou les blocs b(I,J) sont alors soumis à un processus de brassage intra-et/ou inter-blocs ainsi que représentés de manière schématique au point c précité de la figure 2.

Ainsi que l'on pourra le constater à l'observation de cette figure, le brassage inter-blocs consiste en un réarrangement arbitraire des blocs de pixels, ce réarrangement arbitraire étant par exemple symbolisé par la flèche F1, laquelle indique que les blocs diagonaux b(o,o) et b(1,1) du point b ont été permutés. Bien entendu on notera que les blocs de pixels soumis au traitement inter-blocs peuvent être constitués par les blocs b(I,J) précités , ou par des blocs de dimension n x n différente , combinaison de blocs b(I,J) par exemple, ainsi qu'il sera décrit ultérieurement dans la description.

Le brassage intra-blocs consiste par exemple en un réarrangement arbitraire des pixels x(i,j), c'est-à-dire de leur valeur de composantes colorimétriques, luminance respectivement chrominance, pour obtenir un arrangement embrouillé de pixels dans un bloc. Sur la figure 2 au point c, on a représenté le brassage intra-blocs pour les blocs b(1,0) et b(O,1) au moyen des flèches F2, F3 respectivement F4, F5, ces flèches par rapport aux blocs b(O,1), b(1,O) du point b de la même figure indiquant la migration des pixels, c'est-à-dire des valeurs de composantes colorimétriques, luminance respectivement chrominance, à des adresses différentes dans le même bloc, selon une symétrie par rapport à un axe diagonal du bloc.

On constatera ainsi que, suite à l'étape c, l'arrangement des pixels constitués par les taches initiales représentatives de la lettre Q constitue en fait un arrangement embrouillé de blocs et/ou de pixels, la lettre Q n'étant absolument plus reconnaissable.

On notera en particulier que le procédé d'embrouillage-désembrouillage , objet de la présente invention, notamment en ce qui concerne la mise en oeuvre du processus d'embrouillage, peut être mise en oeuvre dans le cas de données numériques d'images telles que des images de télévision numérique ou des images fixes, en l'absence de traitement de compression-décompression d'images par transformée en cosinus discrète TCD.

Au contraire, une description plus détaillée d'un mode de réalisation du procédé objet de l'invention plus particulièrement utilisé dans le cas d'images numériques de télévision, pour la mise en oeuvre d'un processus d'embrouillage utilisant le traitement par TCD, sera décrit en liaison avec la figure 2.

Selon une caractéristique avantageuse du procédé objet de l'invention, celui-ci consiste, ainsi que représenté au point b', respectivement c', postérieurement à l'étape b de processus de découpage de l'image en blocs à soumettre les composantes colorimétriques, en particulier les composantes de luminance et de chrominance, Yp, Crp,Cbp à un traitement par transformée en cosinus discrète, TCD, de façon à obtenir des blocs correspondants de coefficients TCD X(k,l) où k désigne un indice de ligne de bloc TCD et l un indice de colonne de bloc de coefficient TCD correspondant.

Ainsi qu'on l'a en outre représenté en figure 2, les blocs de pixels tels que représentés au point b de cette même figure, sont tout d'abord soumis au point noté b' à un processus de traitement par transformée en cosinus discrète TCD. Suite à cette transformation, les valeurs de luminance respectivement de chrominance de chaque pixel sont transformées en des valeurs numériques correspondantes ainsi que mentionné précédemment dans la description. On notera que les valeurs indiquées aux points b' de la figure 2 ne peuvent en aucun cas être considérées comme des valeurs significatives de coefficients TCD, aux pixels constitués par des taches au point a ou b de la figure 2 étant cependant attribuées de manière arbitraire des signes identiques représentatifs de coefficients TCD pour les besoins de la description. On considérera ainsi qu'à l'étape b' de la figure 2, la représentation de l'image en valeur de coefficients TCD par les blocs b(0,0), b(0,1), b(1,0), b(1,1) est maintenue à la valeur attribuée aux coefficients TCD des pixels représentatifs de la lettre Q constituant cette représentation.

Conformément au procédé objet de l'invention tel que représenté en figure 2, le processus de brassage inter-et/ou intra-blocs est alors effectué sur et ou dans les blocs de coefficients TCD, X(k,l) postérieurement au processus de traitement par TCD. Le processus de brassage précité, ainsi que représenté au point c' de la figure 2 de manière analogue au processus de brassage tel que représenté au point c de la figure 2 est représenté par des flèches f1 lesquelles indiquent la permutation des blocs b(0,0) et b(1,1) pour constituer le brassage inter-blocs, "la migration" des coefficients TCD pour les blocs b(1,0) et b(0,1) de coefficients TCD étant représentée par les flèches f2 et f3 respectivement f4, f5 de façon à assurer une migration comparable à la migration des pixels pour les blocs b(0,1) et b(1,0) du point c de la figure 2. On notera cependant que les transformations intra-blocs F2, F3, F4 et F5 du point c de la figure 2 ne sont pas représentées par des transformations identiques f2, f3, f4, f5 au point c' de la figure 2, mais par des transformations équivalentes ainsi qu'il sera décrit ultérieurement dans la description, alors que les transformations inter-blocs F1, f1 sont identiques.

Ainsi qu'on l'a représenté en figure 2, le procédé objet de l'invention, dans la mise en oeuvre du processus d'embrouillage, peut être réalisé soit par les étapes a, b et c de la figure 2, le processus de brassage inter-et/ou intra-blocs étant effectué sur et ou dans les blocs de pixels x(i,j) antérieurement au processus de traitement TCD, soit par les étapes a, b, b', c' et c'' le processus de brassage inter-et/ou intra-blocs étant effectué sur et/ou dans les blocs de coefficients TCD X(k,l) postérieurement au processus de traitement TCD.

Dans certaines conditions un processus de brassage, à dessein représenté identique au point c'' de la figure 2 à celui du point c de la figure 2, permet d'obtenir un même arrangement de pixels et/ou de blocs embrouillés grâce à des transformations équivalentes dans le domaine pixels avec ou sans transformation dans le domaine TCD.

Dans le cas où les données d'images sont constituées par des données multiplexées d'images de télévision numérique, les composantes colorimétriques étant disponibles sous forme de composantes de luminance Yp respectivement de chrominance CRp,CBp, le processus d'embrouillage conformément au procédé d'embrouillage-désembrouillage de données numériques objet de la présente invention, en particulier le processus d'embrouillage intra-blocs lorsque celui-ci est appliqué par brassage sur les blocs de pixels x(i,j), peut avantageusement consister en une interversion des composantes de luminance et/ou de chrominance des pixels du bloc x(i,j) de pixels considérés. On comprendra ainsi qu'une telle interversion a pour effet de rendre l'image inutilisable. Bien entendu, cette interversion des composantes de luminance et chrominance peut s'appliquer aux blocs de coefficients TCD X(k,l).

Selon un autre aspect du procédé objet de l'invention, le processus de brassage inter-et/ou intra-blocs lorsque ce processus de brassage est appliqué aux blocs de coefficients TCD peut avantageusement consister à modifier soit le signe de certains coefficients TCD X(k,l) de un ou plusieurs blocs considérés, soit l'adresse absolue inter-et/ou intra-blocs de coefficients TCD, l'amplitude de ces coefficients étant maintenue, ainsi qu'il sera décrit ultérieurement dans la description.

Une description plus complète de l'ensemble du procédé d'embrouillage-désembrouillage objet de la présente invention sera maintenant donnée en liaison avec les figures 3a , 3b et 4a , 4b.

Conformément aux figures 3a et 3b, dans le cas où l'embrouillage-désembrouillage est appliqué aux blocs de pixels, le multiplex des données numériques d'images dites images de référence, celles qui sont soumises à la transmission, est tout d'abord soumis à un démultiplexage et à une étape de formation des blocs d'analyse en NxN pixels, cette étape de traitement étant notée A , A' sur la figure 3a, de manière semblable à la figure la précédemment décrite. Les blocs de pixels dits de référence xr(i,j) sont soumis à un processus d'embrouillage eb, ce processus d'embrouillage eb pouvant correspondre, par exemple de manière non limitative, à l'interversion des composantes de luminance et/ou de chrominance des pixels du bloc de pixels considéré, à un brassage inter et/ou intra-blocs de pixels. Les blocs de pixels embrouillés xe(i,j) obtenus suite à ce traitement eb sont alors soumis à une étape de formation du multiplex numérique d'images à partir des blocs de NxN pixels embrouillés, cette étape de formation de multiplex numérique étant notée $A^{-1}$ car elle correspond à l'étape inverse de l'étape de démultiplexage A précédemment décrite pour la figure 3a.

Pour la mise en oeuvre du processus de désembrouillage ainsi que représenté en figure 3b, le multiplex des données numériques d'images embrouillées, précédemment obtenu à la fin d'étapes de traitement telles que représentées en figure 3a à l'issue de l'étape $A^{-1}$, est alors soumis à une étape de démultiplexage et de formation des blocs d'analyse de NxN pixels A,A' sur la figure 3b, laquelle restitue les blocs de pixels embrouil-

EP 0 454 556 B1

lés xe(i,j). Ces blocs de pixels embrouillés sont alors soumis à un traitement de désembrouillage eb$^{-1}$ , ce traitement restituant les blocs de pixels xr(i,j). Les blocs de pixels xr(i,j) sont alors soumis à nouveau à une étape de formation du multiplex numérique d'image à partir des blocs de NxN pixels de référence, cette étape étant notée A$^{-1}$ sur la figure 3b. Suite à cette étape le multiplex des données numériques d'image de référence peut être livré à l'utilisateur, l'image étant restituée dans sa configuration d'origine.

Au contraire lorsque le processus d'embrouillage respectivement de désembrouillage est effectué sur les blocs de coefficients TCD, ainsi que représenté en figure 4a et 4b respectivement, notamment en vue d'assurer la diffusion d'images de télévision numérique, le procédé d'embrouillage objet de la présente invention comporte à l'émission, suite à un traitement de formation d'analyse en NxN pixels et à une étape de multiplexage ces deux étapes étant notées A, A' conformément aux conventions antérieures, une étape de traitement par transformée en cosinus discrète B, cette étape étant appliquée sur les blocs de pixels de référence xr(i,j). L'étape B précitée permet d'obtenir les coefficients TCD correspondants, ceux-ci étant organisés en blocs de NxN coefficient TCD, ces blocs étant notés Xr(k,l). Bien entendu, l'étape de traitement par transformée en cosinus discrète consiste à appliquer la transformation précitée aux composantes de luminance et de chrominance des NxN pixels de chaque bloc xr(i,j). Suite à l'étape B précitée, les blocs de coefficients Xr(k,l) sont soumis à une étape de processus d'embrouillage EB permettant d'obtenir pour chaque bloc d'analyse un bloc de NxN coefficients TCD embrouillés Xe(k,l).

Une étape de traitement par transformée en cosinus discrète inverse TCD$^{-1}$, notée B$^{-1}$, des coefficients embrouillés Xe(k,l) est prévue afin de permettre l'obtention pour chaque bloc d'analyse d'une distribution embrouillée de pixels xe(i,j). La distribution embrouillée de pixels et en particulier de blocs de pixels xe(i,j) est alors soumise à une étape de formation de multiplex numérique d'images à partir des blocs NxN pixels, notée A$^{-1}$ sur la figure 4a. Le multiplex de données numériques d'images embrouillées est ainsi obtenu à l'extérieur de la chaîne de transmission numérique à réduction de débit.

Cette étape peut être supprimée dans le cas où le traitement d'embrouillage est intégré dans l'équipement codeur de traitement de réduction de débit par TCD, et avantageusement remplacée par les étapes C et D de la figure 1a.

De même, ainsi que représenté en figure 4b, dans le cas d'une image de télévision numérique, le procédé selon l'invention comporte, à la réception à l'extérieur de la chaîne de transmission numérique à réduction de débit du multiplex des données numériques d'images embrouillées, suite au traitement selon le procédé tel que représenté en figure 4a, une étape de démultiplexage et de formation des blocs d'analyse en NxN pixels A , A' conformément aux conventions antérieures, cette étape permettant d'obtenir des blocs de pixels xe(i,j) d'images embrouillées. Les blocs de pixels d'images embrouillées précitées sont soumis ensuite à une étape de traitement par transformée en cosinus discrète TCD des composantes de chrominance et de luminance des NxN pixels de chaque bloc embrouillé afin d'obtenir NxN coefficients TCD embrouillés Xe(k,l) pour chacun des blocs correspondants.

Cette étape peut être avantageusement remplacée par les étapes D$^{-1}$ et A' de la figure 1b dans le cas où le traitement de désembrouillage est intégré dans l'équipement décodeur de traitement de réduction de débit par TCD.

Les blocs de coefficients embrouillés Xe(k,l) sont soumis alors à une étape de processus de désembrouillage EB$^{-1}$ , ce processus de désembrouillage correspondant à la transformation inverse du processus d'embrouillage EB dans la figure 4a. Cette étape de processus de désembrouillage permet d'obtenir pour chaque bloc d'analyse NxN coefficients TCD Xr(k,l) et correspondant à des blocs de coefficients TCD de référence. Chaque bloc de coefficients TCD de référence correspond à un bloc représentatif d'un bloc de coefficients TCD désembrouillé.

Une étape de traitement par transformée en cosinus discrète inverse TCD$^{-1}$ , étape B$^{-1}$ conformément aux conventions antérieures , permet d'obtenir pour chaque bloc de coefficients TCD de référence Xr(k,l) une distribution désembrouillée des composantes de luminance et de chrominance en bloc de référence de NxN pixels xr(i,j) correspondant. Les blocs de pixels xr(i,j) ainsi obtenus sont ensuite soumis à une étape de formation du multiplex numérique d'images, cette étape étant notée A$^{-1}$ selon les conventions antérieures. Le multiplex des données numériques d'images de référence peut alors être délivré à l'utilisateur.

Toutes les variantes de mise en oeuvre du procédé d'embrouillage-désembrouillage objet de l'invention se traduisent dans le domaine de transformation TCD par un brassage des blocs NxN de coefficients TCD X(k,l) de l'image où par un brassage à l'intérieur des blocs TCD des coefficients de ces blocs. Le maintien de la qualité vidéo des images s'obtient par conservation, après embrouillage, de l'intégralité des amplitudes des coefficients TCD de l'image originale.

Deux catégories de traitement d'embrouillage ont été distinguées :
- les traitements intra-blocs et les traitements inter-blocs.
Une description plus détaillée de traitement intra-blocs particulièrement avantageux , notamment dans le

7

cas d'images de télévision numériques , sera donnée en liaison avec la figure 5.

Dans le cas d'un brassage intra-blocs effectué directement sur les blocs de coefficients TCD , les méthodes d'embrouillage et de brassage utisées visent à modifier la répartition des coefficients TCD , X(k,l) dans les blocs correspondants où à modifier le signe de certains coefficients.

Du fait du respect de l'amplitude de chaque coefficient TCD , les dégradations liées à l'embrouillage ne peuvent intervenir que dans l'étape suivante de quantification.

Afin de ne pas introduire de dégradations dans l'étape de compression correspondante, le procédé objet de l'invention exploite les caractéristiques des lois de quantification qui découlent des propriétés des blocs de coefficients TCD , X(k,l) , c'est-a-dire :

- maintien du coefficient X(O,O) ,
- inversion possible du signe des autres coefficients X(k,l) ,
- permutation possible de couples de coefficients symétriques par rapport à la diagonale définie par X(O,O) , X(N-1, N-1) la permutation étant définie par la relation : X(k,l)-->X(l,k).

La mise en oeuvre de ces méthodes d'embrouillage peut être effectuée simplement au sein des équipements de compression/décompression d'images entre les étapes de transformation TCD (respectivement de transformation inverse TCD$^{-1}$) et de quantification (respectivement de quantification inverse) des blocs TCD. Une telle solution est économique car il s'agit d'ajouter uniquement une étape supplémentaire de traitement des coefficients TCD X(k,l) dans les équipements de compression/décompression. Une telle mise en oeuvre implique cependant que seul le prestataire de service, lequel comme maître d'oeuvre assure le transport des signaux , peut effectuer l'embrouillage ce qui interdit un contrôle direct de la confidentialité à la source de transmission par les opérateurs.

Lorsqu'au contraire les méthodes d'embrouillage précitées sont mises en oeuvre en amont du dispositif de compression d'images , c'est-à-dire au niveau des blocs b(I,J) de pixels x(i,j) d'images , deux solutions peuvent être appliquées afin de produire les mêmes caractéristiques d'embrouillage dans le domaine TCD.

Une première solution consiste à créer un système équivalent à l'association de deux équipements de compression/décompression d'images dans lequel les étapes de quantification et de codage sont remplacées par une étape d'embrouillage par manipulation des blocs de coefficients TCD X(k,l) ainsi que représentés en figure 4a respectivement 4b dans lesquels un traitement amont des blocs de pixels x(i,j) est ainsi effectué.

La solution précitée est d'une mise en oeuvre plus coûteuse car elle implique l'utilisation dans la chaîne d'embrouillage/désembrouillage de deux étapes supplémentaires de traitement par TCD , les traitements B et B$^{-1}$ sur la figure 4a respectivement 4b.

La deuxième solution consiste à utiliser les propriétés de la transformation TCD pour appliquer directement les traitements d'embrouillage aux blocs de NxN pixels et donc de pouvoir réaliser des systèmes d'embrouillage économiques ainsi que représentés en figure 3a et 3b.

En se référant aux définitions et notations données en annexe en fin de la présente description, le procédé objet de l'invention définit des processus d'embrouillage-désembrouillage applicables aux blocs de NxN pixels x(i,j) , ces processus correspondant à des processus dans le domaine TCD des coefficients TCD X(k,l) conformes au maintien de la qualité TCD précédemment définie dans la description.

Dans le cas des transformations assurant le processus d'embrouillage-désembrouillage tel que représenté en figure 5 , l'embrouillage effectué en amont sur des blocs NxN pixels x(i,j) est équivalent à un embrouillage effectué en aval sur des blocs de NxN coefficient TCD X(k,l).

On notera que les transformations assurant les processus d'embrouillage précités au niveau des blocs NxN pixels, processus d'embrouillage, eb, et processus de désembrouillage de ces mêmes blocs de pixels, eb$^{-1}$, correspondent respectivement par exemple à la transformation identité , miroir vertical , miroir horizontal , miroir diagonal $\pi/4$ , miroir diagonal $3\pi/4$ , rotation $\pi/2$ , rotation $\pi$ , rotation $3\pi/2$ pour chaque bloc b(I,J) considéré.

Le processus d'embrouillage de l'image est alors obtenu en associant à chaque bloc pixels de l'image une transformation ou une combinaison de transformations précédemment mentionnée.

La réalisation des systèmes d'embrouillage utilisant des traitements intra-blocs pixels ou TCD peut être mise en oeuvre au moyen d'une table de correspondance d'embrouillage respectivement désembrouillage, laquelle, associe à chaque bloc b(I,J) un des traitements ou une combinaison de traitements précédemment décrit en liaison avec la figure 5.

La complexité des systèmes d'embrouillage dépend ainsi de la variété des traitements retenus et le degré de difficulté du perçage du code d'accès dépend de la complexité de la table de correspondance. Des techniques mettant en oeuvre la génération de séquences pseudo-aléatoires pour assurer la combinaison des transformations précitées , peuvent être utilisées afin de construire les tables de correspondance et ainsi limiter l'accès aux informations nécessaires à un désembrouillage d'images en vue d'assurer un contrôle d'accès.

En outre, les propriétés du quantificateur traitant les coefficients TCD peuvent être exploitées pour opérer d'autres transformations sur les blocs. Ainsi , et dans le cas où la précision de la quantification est maintenue lorsque l'on opère un changement de signes des coefficients TCD ou des pixels , il est possible d'utiliser la transformation produit par -1.

Par contre dans la conception des systèmes d'embrouillage, il est nécessaire de prendre en compte certains traitements complémentaires qui peuvent être opérés en aval de la compression par TCD , et adapter en conséquence les tables de correspondance entre blocs et traitements associés. De telles contraintes supplémentaires peuvent intervenir dans les traitements de compression d'images animées avec par exemple la mise en oeuvre de techniques de prédictions de blocs inter-trames ou inter-images ou de compensation de mouvement.

En ce qui concerne le traitement inter-blocs, les méthodes d'embrouillage utilisées peuvent se baser sur un brassage dans l'image des blocs de pixels utilisés pour la compression TCD opérée postérieurement. Le brassage précédemment mentionné peut être effectué indifféremment sur les blocs de pixels de l'image ou sur les blocs de coefficients TCD.

Les processus d'embrouillage qui seront décrits maintenant relativement à l'embrouillage inter-blocs sont relatifs à des transformations opérées dans le domaine images , ces transformations s'appliquant par analogie dans le domaine TCD.

Pour rappel, l'image ou la trame est décomposée en blocs b(I,J) de pixels où I et J désignent les coordonnées du bloc dans l'image , I désignant ainsi un indice de ligne du bloc dans l'image , I variant de O à P-1 de gauche à droite et J un indice de la colonne du bloc dans l'image, J variant de O à Q-1 de haut en bas. On notera , ainsi que mentionné précédemment , que les blocs b(I,J) de pixels peuvent être égaux ou multiples des blocs de pixels précédemment décrits dans la description.

Un premier jeu de traitement d'embrouillage-désembrouillage peut consister à opérer une application bijective dans l'ensemble des PxQ indices I,J des blocs d'images pour associer un nouveau jeu d'indices (I',J') définissant la table de correspondance des blocs du brassage appliqué.

Une telle technique peut être mise en oeuvre au moyen d'une mémoire d'images organisée en blocs de pixels afin de permettre l'adressage à chaque couple d'indices I,J d'un nouveau couple I',J' défini par la table de brassage.

Le nombre de permutations possibles à l'intérieur des PxQ couples (I,J) est PxQ! , ce qui assure une très forte protection de l'embrouillage.

Une restriction du jeu des permutations possibles peut simplifier la réalisation des équipements par exemple en conservant des systèmes basés sur des permutations à l'intérieur des lignes P! possibilités ou à l'intérieur des colonnes Q! possibilités.

Des systèmes plus complexes peuvent être envisagés en combinant les permutations en lignes et en colonnes , P! x Q! possibilités.

En outre , on peut augmenter la variété des permutations possibles en autorisant des permutations entre blocs de composantes colorimétriques c'est-à-dire, dans le cas d'images de télévision numériques, de luminance respectivement chrominance différentes lorsque les lois applicables à la quantification et au codage des coefficients TCD de celles-ci sont identiques.

Une description plus détaillée d'un dispositif d'embrouillage-désembrouillage de données multiplexées d'images , notamment d'images de télévision numériques conformes à l'objet de la présente invention , sera donnée en liaison avec la figure 6a.

Le procédé d'embrouillage-désembrouillage intra-blocs et inter-blocs objet de la présente invention a été mis en oeuvre dans le domaine images en créant des dispositifs de manipulations des pixels d'images numériques conformes à la norme de télévision numérique 4-2-2 établie par la recommandation 601 du CCIR. Le dispositif décrit en relation avec la figure précitée permet d'effectuer un embrouillage ou un désembrouillage en temps réel sur des signaux de télévision numériques 4-2-2 transmis sur une interface parallèle selon la recommandation 656 du CCIR.

Ainsi qu'on l'a représenté en figure 6a, le dispositif d'embrouillage-désembrouillage de données multiplexées d'images de télévision numériques selon l'invention comporte un démultiplexeur 2 permettant d'extraire les composantes de luminance Y et de chrominance Cb,Cr des pixels constitutifs de l'image ainsi que les composantes de données de suppression non soumises au processus d'embrouillage-désembrouillage.

Le dispositif comporte également un premier circuit 4 et un deuxième circuit 5 de mémorisation par blocs de pixels des composantes de luminance respectivement de chrominance. La mémorisation par bloc permet ainsi d'engendrer un découpage spatial correspondant de l'image.

En outre, un troisième circuit de mémorisation 6 est prévu afin d'assurer une mémorisation des données non soumises au processus d'embrouillage-désembrouillage. Ces données non soumises au traitement sont, par exemple , les données de suppression de trame.

9

Un dispositif de brassage est en outre prévu, ce dispositif assurant le brassage intra-blocs et/ou inter-blocs de pixels de chaque composante et mettant en oeuvre des circuits séquenceurs d'adresses de lecture et d'adresses d'écriture, des circuits de mémorisation 4 et 5 précédemment cités pour obtenir un arrangement embrouillé de pixels ainsi qu'il sera décrit ci-après dans la description.

Bien entendu , un circuit multiplexeur 3 est prévu afin de permettre à partir des blocs de pixels embrouillés de luminance EY respectivement de chrominance ECb,ECr et des données non soumises au traitement de reconstituer un multiplex d'images embrouillées en vue d'assurer le traitement ultérieur des données d'images ou leur transmission.

Ainsi qu'on l'a représenté en outre en figure 6a , le circuit 1 permet à partir du signal de télévision numérique au format 4-2-2 précédemment mentionné d'extraire les références de synchronisation vidéo et de délivrer les divers signaux d'horloge utilisés pour piloter les circuits des autres éléments de la figure 6a. Les liaisons du circuit 1 à ces éléments ne sont pas représentées sur cette figure , mais le circuit 1 permet de délivrer un signal d'horloge octets , un signal d'horloge lignes actives , un signal d'horloge de suppression , un signal d'horloge de trames ainsi que des signaux d'horloge de blocs de NxN pixels , le nombre N étant fixé égal à 8. Enfin le circuit 1 permet de délivrer un signal du type standard vidéo 525/60 , 625/50.

Dans le mode de réalisation tel que représenté en figure 6a , les premier et deuxième circuits de mémorisation de composantes de luminance Y respectivement de chrominance Cb,Cr peuvent comporter avantageusement une première mémoire vive d'octets référencée 4 , cette mémoire étant destinée à mémoriser les composantes de luminance des blocs NxN pixels. La mémoire vive 4 permet de stocker par exemple 2 fois 90 blocs de 8x8 pixels de luminance. Le séquencement lecture/écriture de cette mémoire est organisé de telle sorte que pendant l'écriture des données de luminance d'un groupe de 90 blocs de 8x8 pixels de luminance , c'est-à-dire 8 lignes vidéo actives de luminance consécutives , la lecture de l'autre groupe de 90 blocs de 8x8 pixels de luminance , soit 8 lignes vidéo actives de luminance précédemment stockées est effectuée. Le premier circuit de mémoire 4 est piloté par un séquenceur d'adressage en lecture 9 ainsi qu'il sera décrit ci-après.

En outre, le deuxième circuit de mémorisation comporte un deuxième circuit de mémoire vive d'octets 5 destiné à mémoriser les composantes de chrominance Cr,Cb des blocs de NxN pixels. Le circuit de mémoire vive 5 permet de stocker 2 fois 90 blocs de 8x8 pixels de chrominance soit 45 blocs Cb plus 45 blocs Cr. Le séquencement lecture/écriture de cette mémoire est organisé de façon analogue au séquencement de la mémoire 4.

Un séquenceur d'adressage en lecture du deuxième circuit mémoire 5 est prévu , ce séquenceur d'adressage étant noté 10.

Un séquenceur d'adressage en écriture de la première et de la deuxième mémoire respectivement 4 , 5 est également prévu afin d'assurer l'écriture puis la lecture de la première et de la deuxième mémoire 4 respectivement 5 de façon à réaliser le processus de brassage intra-blocs ou inter-blocs précédemment décrit relativement au procédé objet de l'invention.

En outre, un troisième circuit de mémoire vive 6 est prévu , ce circuit de mémoire vive étant constitué en une mémoire RAM d'octets et permet de stocker 2 fois 90 blocs de 8x8 pixels. Il a pour rôle d'assurer un tampon de retard pour les données non traitées par le processus d'embrouillage selon la présente invention. Un séquenceur d'adressage en écriture/lecture de la troisième mémoire vive 6 est également prévu afin d'assurer le séquencement de lecture et d'écriture des données non traitées.

Le fonctionnement du dispositif objet de l'invention tel que représenté en figure 6a est le suivant. L'application des méthodes et processus d'embrouillage et de désembrouillage aux groupes de blocs de 8x8 pixels, 90 blocs de luminance et 45 blocs de chrominance Cr et Cb , s'obtient grâce aux circuits séquenceurs d'adresses 9 et 10 lesquels produisent des séquencements d'adresses de lecture différents des séquencements d'adresses d'écriture issus de 7 pour les deux circuits de mémoire octets de luminance respectivement de chrominance.

Le séquenceur d'adresse d'écriture 7 permet d'assurer l'écriture des données respectives de luminance Y et de chrominance Cb,Cr dans les mémoires 4 et 5 correspondantes. Chaque groupe de 90 blocs de 8x8 pixels de luminance respectivement de chrominance est écrit dans l'ordre d'arrivée des échantillons après démultiplexage 4-2-2, c'est-à-dire sur 8 lignes actives vidéo consécutives. En référence aux notations indiquées en annexe à la présente description et compte-tenu des notations suivantes , on peut écrire les relations suivantes sur l'adressage d'écriture d'un pixel à l'intérieur d'un groupe de 90 blocs de 8 x 8 pixels de luminance dans la mémoire vive 4 :

BY (n) : Bloc 8 x 8 pixels Y, $n \in [0,90[$ de gauche à droite

xy (n, i, j) : adresse de l'élément i, j du bloc BY(n)

xy (n,i,j) = xy (n,o,o) + 720 j + i

xy (n,o,o) = xy (o,o,o) + 8 x n

De la même manière pour la mémoire vive octets de chrominance 5 on a les relations suivantes pour l'adressage d'écriture des blocs de 8 x 8 pixels Cr et Cb:

BCB (n) : Bloc 8 x 8 pixels Cb, n ∈ [o,45[ de gauche à droite

BCR (n) : Bloc 8 x 8 pixels Cr, n ∈ [o,45[ de gauche à droite

xCB (n,i,j) : adresse de l'élément i,j du bloc BCB (n)

xCR (n,i,j) : adresse de l'élément i,j du bloc BCR (n)

xCB (n,i,j) = xCB (n,o,o) + 720 j + 2i

xCR (n,i,j) = xCR (n,o,o) + 720 j + 2i

xCB (n,o,o) = xCB (o,o,o) + 16 n

xCR (n,o,o) = xCR (o,o,o) + 16 n

xCR (o,o,o) = xCB (o,o,o) + 1

Les relations précédentes mettent en évidence la décomposition de l'adressage des pixels x(n,i,j) de luminance ou de chrominance en :

- un terme constant dépendant de l'adressage en mémoire vive du premier pixel du groupe de 90 blocs de 8x8 pixels : cet adressage et cet élément étant notés x(O,O,O) et appelé dans la suite décalage de groupe ou (OFF groupe) ,
- un terme dépendant uniquement de la position du bloc dans le groupe de 90 blocs , 8xn pour les blocs de luminance Y ou 16xn pour les blocs de chrominance Cr/Cb , ce terme étant désigné dans la suite de la description par décalage de bloc (n) ou (OFF bloc) (n),
- un terme dépendant uniquement de la position du pixel dans le bloc de 8x8 pixels , soit 720j+i pour les blocs de luminance Y ou 720j+2i pour CR/CB ce terme étant désigné par la suite par décalage de pixels (i,j) ou (OFF pixel(i,j)).

Compte tenu des considérations précédentes l'adressage des pixels x(n,i,j) s'écrit :

- x(n,i,j)= décalage groupe + décalage bloc (n) + décalage pixel (i,j).

Pour appliquer les méthodes d'embrouillage et de désembrouillage objets de la présente invention à l'aide des séquenceurs d'adresses de lecture 9 et 10 tels que décrits en figure 6a , il suffit alors :

- de conserver la valeur du décalage de groupe,
- de brasser les adresses de décalage de blocs (n) pour effectuer un embrouillage inter-blocs,
- de brasser les adresses de décalage pixels (i,j) pour effectuer un embrouillage intra-blocs,
- d'additionner les différents termes pour obtenir l'adresse de lecture délivrée par 9 ou 10.

Un mode de réalisation non limitatif des séquenceurs d'adressage 9 et 10, précédemment décrits dans le cadre de la figure 6a, sera maintenant décrit de manière plus détaillée en relation avec la figure 6b.

Ainsi que représenté sur cette figure , le séquenceur d'adressage en lecture 9 ou 10 de la première respectivement deuxième mémoire vive 4 ou 5 comporte un premier circuit 10a de décalage d'adresse des blocs de pixels permettant d'assurer un embrouillage inter-blocs , un deuxième circuit 10b de décalage d'adresse de pixels permettant d'assurer un embrouillage intra-blocs des NxN pixels de chaque bloc et un circuit commun 16 générateur d'adresses recevant des adresses de décalage de blocs et de pixels plus une référence de décalage de groupe , ce circuit commun 16 délivrant une adresse de lecture à la première respectivement deuxième mémoire vive 4 , 5.

Ainsi qu'il apparaît en figure 6b , le premier circuit 10a dit de décalage d'adresses des blocs de pixels comporte un compteur de blocs 11 lequel est constitué par un compteur de blocs modulo 90 asservi par le circuit de synchronisation et d'horloge 1, bien que les liaisons correspondantes, ainsi que déjà mentionné, ne soient pas représentées. Le compteur de blocs 11 délivre le numéro de bloc courant à traiter. Dans le cas du traitement des blocs de chrominance Cr et Cb, la mémoire 5 de 90 blocs de chrominance contient 45 blocs Cb et 45 blocs Cr, les blocs Cb étant repérés par un numéro pair et les blocs Cr par un numéro impair. Le compteur de blocs 11 est alors adapté pour compter modulo 45, un bit de sélection de blocs de chrominance Cb ou Cr non représenté sur la figure étant utilisé pour fournir en accord avec la loi de multiplexage de télévision numérique les échantillons de chrominance avec une alternance Cb, Cr, ce bit de sélection étant utilisé pour compléter les bits du compteur modulo 45 et délivrer une valeur comprise en 0 et 89. Le premier circuit 10a de décalage d'adresses des blocs de pixels comporte également une mémoire permanente 12 , mémoire de type ROM , cette mémoire étant accessible uniquement en lecture. La mémoire précitée 12 permet d'associer à chaque valeur en entrée-valeur de O à 89, une valeur en sortie de O à 89 définie par la loi de permutation inter-blocs. Les valeurs en sortie délivrées par la mémoire permanente 12 fournissent les termes d'adresses de décalage de blocs (n) qui assurent l'embrouillage inter-blocs.

Afin de disposer d'une variété de type d'embrouillage inter-blocs , ainsi que représentée en figure 6b , il est bien entendu possible d'utiliser une mémoire 12 de type ROM contenant plusieurs tables différentes d'embrouillage et d'opérer la sélection de la table d'embrouillage par ajout d'un décalage sur l'adresse de lecture de la mémoire 12. Le circuit 13 permet d'assurer la sélection d'embrouillage-désembrouillage inter-blocs correspondante par fourniture du décalage sur l'adresse de lecture de la mémoire 12 précitée. En outre , le premier circuit de décalage d'adresse 10a des blocs de pixels comporte un circuit 14 permettant de sélectionner la modification du type d'embrouillage-désembrouillage. Ce circuit 14 a pour effet d'initialiser le compteur de blocs 11 avec une valeur non nulle au début de la relecture du groupe de 90 blocs. Cette technique permet d'engendrer 90 types d'embrouillage inter-blocs différents à partir d'une seule table de correspondance de la mémoire permanente 12. Le circuit 14 permet ainsi d'opérer un interfaçage externe de sélection de modification du type d'embrouillage.

De manière analogue , le deuxième circuit de décalage d'adresses de pixels 10b, tel que représenté en figure 6b, permet d'assurer un embrouillage intra-blocs des pixels de chaque bloc. On comprendra ainsi que le circuit 21 constitue un compteur de pixels dont le fonctionnement est sensiblement analogue au compteur de blocs 11 précédemment décrit. Bien entendu le compteur de pixels 21 est un compteur de pixels par blocs de 8x8 modulo 64, lequel est asservi par le circuit 1 de synchronisation et d'horloge. Le compteur de pixels 21 associe à chaque valeur en sortie un couple unique i,j par la relation 8j+i.

De même , une mémoire permanente de type ROM 22 est prévue , cette mémoire contenant les tables de brassage de pixels à l'intérieur des blocs de 8x8 pixels soit en fait 64 éléments.

Enfin , le circuit 23 assure une sélection de l'embrouillage-désembrouillage intra-blocs et sert à opérer l'interfaçage externe de sélection du type d'embrouillage ou désembrouillage intra-blocs utilisé. Bien entendu , sur lecture de la mémoire permanente de type ROM 22, les valeurs délivrées par celle-ci correspondent aux termes d'adresses de lecture de décalage pixel (i,j), ce terme de décalage assurant l'embrouillage intra-blocs, ainsi que décrit précédemment dans la description relativement au procédé objet de l'invention.

Sur la figure 6b on notera également la présence du compteur de groupes de blocs 15 lequel est également asservi par le circuit de synchronisation et d'horloge 1. Le compteur de groupes de blocs 15 sert à délivrer le terme d'adresses décalage groupe du groupe de 90 blocs de 8x8 pixels en cours de traitement. Les différentes adresses de décalage groupe , décalage bloc (n) et décalage pixel (i,j) sont alors délivrés ainsi que représenté en figure 6b, au générateur d'adresses de lecture 16 lequel sert à engendrer l'adresse de lecture délivrée par 9 ou 10 par simple addition des adresses, décalage blocs , décalage groupe , décalage pixel, l'addition s'entendant en une addition logique.

On notera que la mise en oeuvre des méthodes d'embrouillage inter-blocs ou intra-blocs seule peut être facilement réalisée au moyen du dispositif séquenceur d'adresses de lecture tel que représenté en figure 6 car les modes opératoires correspondants sont indépendants.

On notera bien entendu également que pour assurer les opérations de désembrouillage , il suffit d'utiliser le même équipement tel que représenté en figures 6a et 6b avec les seules adaptations suivantes :
- remplacement de la mémoire permanente de type ROM 12 d'embrouillage inter-blocs par une mémoire de type semblable organisée de façon identique mais contenant les tables de brassage inverses de celles utilisées à l'embrouillage ,
- remplacement de la mémoire permanente de type ROM 22 d'embrouillage intra-blocs par une mémoire permanente de même type organisée de façon identique mais contenant les tables de brassage inverses que celles utilisées à l'embrouillage ,
- modification du circuit de sélection de modification de type d'embrouillage-désembrouillage afin d'appliquer un décalage inverse au compteur de blocs 11.

La variété d'actions possibles pour modifier le type d'embrouillage appliqué au groupe de 90 blocs de pixels peut être mise à profit afin d'utiliser une méthode différente d'embrouillage pour chaque groupe. On peut par exemple utiliser des générateurs de séquences pseudo-aléatoires réinitialisés en trames ou en images pour commander les circuits de sélection d'embrouillage-désembrouillage inter-blocs 13 ou intra-blocs 23 ainsi que le circuit de sélection de modification de type d'embrouillage-désembrouillage 14.

On notera que le dispositif décrit en liaison avec les figures 6a et 6b permet la mise en oeuvre d'embrouillage intra-blocs et inter-blocs sur les blocs formés à partir des composantes de chrominance Cr, Cb ou de luminance Y relativement à des blocs de 8x8 pixels.

En outre , ce dispositif permet d'effectuer des permutations entre blocs de nature différente tels que les blocs de chrominance Cr, Cb.

L'ensemble des traitements s'applique à des parties d'images constituées de 8 lignes actives vidéo numériques consécutives soit :
- 45 blocs Cr8x8 ,
- 45 blocs Cb8x8 ,
- 90 blocs Y 8x8.

Pour chaque partie d'image active ainsi constituée, un traitement différent peut être appliqué et les données de suppression non manipulées par le traitement TCD conformément aux recommandations du document CMTT 303 ne sont pas embrouillées par le dispositif.

Bien entendu , le dispositif objet de la présente invention tel que représenté en figure 6a et 6b peut également être mis en oeuvre relativement aux coefficients TCD de luminance et de chrominance. Dans ce cas , ainsi que représenté en figure 7 , l'ensemble constitué par la première et la deuxième mémoire vive respectivement notées 4 et 5 , le séquenceur d'adressage en lecture de la première et de la deuxième mémoire vive respectivement notées 9 et 10 est adapté de façon que les première et deuxième mémoires vives étant configurées de façon à stocker les coefficients TCD , ces coefficients sont transmis à partir d'un processeur de TCD muni d'une mémoire tampon 301, 302 sur chaque voie de luminance respectivement de chrominance selon une séquence de transmission semblable à la séquence de transmission des composantes de luminance respectivement de chrominance des pixels. Sur la figure 7 , on notera que le démultiplexeur 2 est suivi par un processeur de TCD muni d'une mémoire tampon 301, 302 sur chaque voie de luminance respectivement de chrominance, le circuit de synchronisation d'horlorge conservant essentiellement les mêmes fonctions afin d'assurer la transmission à partir des circuits 301, 302 selon une séquence de transmission semblable à la séquence de transmission des composantes de luminance et de chrominance des pixels. Bien entendu, de la même manière , le multiplexeur 3 est précédé alors par un processeur de TCD inverse muni d'une mémoire tampon 401, 402 lesquels permettent de mémoriser les coefficients TCD embrouillés notés respectivement pour la composante de luminance ETCDY et pour la composante de chrominance ETCD Cb, Cr, et de restituer les pixels correspondants. Dans ce cas , le fonctionnement est sensiblement analogue au fonctionnement du dispositif tel que représenté en figures 6a et 6b.

On notera toutefois sur la figure 7, les circuits 41 et 51 destinés à modifier ou non le signe du coefficient TCD en cours de traitement.

Les séquenceurs d'adresses de lecture 9 et 10 sont adaptés de manière à délivrer en plus de l'adrese de lecture des coefficients TCD, un bit destiné à indiquer si le coefficient doit changer de signe.

Cette information de changement de signe correspond à l'emploi d'un bit supplémentaire dans la mémoire ROM 22 (figure 6b) de mémorisation d'embrouillage intra-blocs de coefficients TCD. On notera enfin, ainsi qu'on l'a d'ailleurs indiqué en figure 6b, que le compteur 21 correspond alors à un compteur de coefficients TCD en lieu et place du compteur de pixels.

## ANNEXE

### Notations et définitions

#### Notations utilisées pour les traitements de TCD sur blocs N x N

b(I,J) :            bloc de N x N pixels d'adresse I,J dans l'image
I :               indice de ligne de blocs de pixels dans l'image (0 à P-1 de gauche à droite)
J :               indice de colonne de blocs de pixels dans l'image (0 à Q-1 de haut en bas)
x(i,j) :           pixel d'adresse i,j dans un bloc de pixels
xr(i,j) :          pixel dans un bloc de référence de N x N pixels
xe(i,j) :          pixel dans un bloc embrouillé de N x N pixels
(i,j) :             coordonnées dans le bloc N x N pixels
i :               indice de ligne (0 à N-1 de gauche à droite)
j :               indice de colonne (0 à N-1 de haut en bas)
X(k,l) :          coefficient TCD dans un bloc de N x N coefficients TCD
Xr(k,l) :         coefficient TCD dans un bloc de référence de N x N coefficients TCD
Xe(k,l) :         coefficient TCD dans un bloc embrouillé de N x N coefficients TCD
(k,l) :            coordonnées dans le domaine de transformation TCD
k :               indice de ligne (0 à N-1 de gauche à droite)
l :               indice de colonne (0 à N-1 de haut en bas)

### Définition de la transformée en cosinus discrète :

#### Transformée directe :

$$X(k, l) = \frac{4}{N^2} \; C_k \; C_l \sum_{i=0}^{N-1} \sum_{j=0}^{N-1} x(i,j) \cos \frac{\pi (2i + 1)k}{2N} \cos \frac{\pi (2j + 1)l}{2N}$$

Transformée inverse :

$$x(i,j) = \sum_{k=0}^{N-1} \sum_{l=0}^{N-1} C_k\, C_l\, X(k,l)\, \cos \eta\, \frac{(2i+1)k}{2N}\, \cos \eta\, \frac{(2j+1)l}{2N}$$

avec

$$C_k = \frac{1}{\sqrt{2}} \text{ pour } k = o, \qquad C_l = \frac{1}{\sqrt{2}} \text{ pour } l = o$$

$C_k = 1$ ailleurs      $C_l = 1$ ailleurs

## Revendications

1.  Procédé d'embrouillage-désembrouillage de données d'images numériques, caractérisé en ce qu'il consiste, pour assurer l'embrouillage :

    a) à soumettre lesdites données à un traitement pour extraire les composantes colorimétriques des pixels constitutifs de l'image,

    b) à constituer lesdites composantes en blocs b(I,J) de NxN pixels x(i,j) de façon à engendrer un découpage spatial correspondant de l'image où I désigne un indice de ligne et J un indice de colonne d'arrangement des blocs dans l'image, et i désigne un indice de ligne et j un indice de colonne d'arrangement des pixels dans chaque bloc,

    c) à soumettre lesdits pixels et/ou blocs à un processus de brassage intra-et/ou inter-blocs, ledit brassage inter-blocs consistant en un réarrangement arbitraire desdits blocs de pixels et ledit brassage intra-bloc consistant en un réarrangement arbitraire des pixels de chaque bloc pour obtenir un arrangement embrouillé de blocs et/ou de pixels, le désembrouillage étant effectué par transformation inverse du processus d'embrouillage relativement au réarrangement arbitraire des blocs de pixels et des pixels effectué au processus de brassage.

2.  Procédé selon la revendication 1, caractérisé en ce que celui-ci, pour assurer l'embrouillage, consiste antérieurement à l'étape c) de processus de brassage,

    a) à soumettre chaque bloc relatif à chacune des composantes à un traitement par transformée en cosinus discrète TCD de façon à obtenir des blocs correspondants de coefficients TCD X(k,l) où k désigne un indice de ligne et l un indice de colonne des coefficients TCD dans les blocs NxN coefficients TCD correspondants,

    b) à effectuer ledit processus de brassage inter-et/ou intra-blocs sur et/ou dans lesdits blocs de coefficients TCD X(k,l) postérieurement au processus de traitement par transformée en cosinus discrète.

3.  Procédé selon la revendication 2, caractérisé en ce que ledit processus de brassage inter-et/ou intra-blocs est effectué sur et/ou dans lesdits blocs de pixels x(i,j) antérieurement au processus de traitement par transformée en cosinus discrète.

4.  Procédé selon l'une des revendications 2 ou 3, caractérisé en ce que ledit processus de brassage inter-et/ou intra-blocs TCD consiste à modifier soit le signe de coefficients TCD X(k,l) soit l'adresse absolue inter-et/ou intra-blocs de coefficients TCD, l'amplitude de ces coefficients X(k,l) étant maintenue.

5.  Procédé selon l'une des revendications précédentes, caractérisé en ce que l'embrouillage est obtenu par une combinaison séquentielle d'étapes successives comportant la succession des étapes de transformation en cosinus discrète et de brassage des revendications 1 et 2, les étapes successives étant appliquées aux différents blocs.

6.  Procédé selon l'une des revendications 1 ou 2 précédentes, caractérisé en ce que dans le cas où lesdites données d'image sont constituées par des données multiplexées d'image de télévision numérique, ledit processus d'embrouillage intra-blocs consiste en une interversion des composantes de luminance et/ou de chrominance des pixels du bloc de pixels courant.

7. Procédé selon l'une des revendications 2 ou 4 précédentes, caractérisé en ce que, en vue d'assurer la diffusion d'images de télévision numérique, ledit procédé comporte à l'émission, suite au traitement de formation des blocs d'analyse en NxN pixels,
   - une étape de traitement par transformée en cosinus discrète des composantes de luminance et/ou de chrominance des NxN pixels xr(i,j) de chaque bloc b(I,J) permettant d'obtenir NxN coefficients TCD Xr(k,l) pour chaque bloc d'analyse correspondant,
   - une étape de processus d'embrouillage (EB), permettant d'obtenir pour chaque bloc d'analyse NxN coefficients TCD Xr(k,l) un bloc de coefficients TCD embrouillés Xe(k,l),
   - une étape de traitement par transformée en cosinus discrète inverse TCD$^{-1}$ des coefficients TCD embrouillés Xe(k,l) permettant d'obtenir pour chaque bloc d'analyse une distribution embrouillée de blocs de pixels xe(i,j),
   - une étape de traitement de formation du multiplex numérique d'image embrouillée destinée à la diffusion.

8. Procédé selon la revendication 7, caractérisé en ce que, en vue d'assurer la diffusion d'images de télévision numérique, ledit procédé comporte à la réception, suite à un traitement de formation des blocs d'analyse de NxN pixels xe(i,j) d'images embrouillées,
   - une étape de traitement par transformée en cosinus discrète TCD des composantes de chrominance et de luminance des NxN pixels de chaque bloc embrouillé, permettant d'obtenir NxN coefficients TCD embrouillés Xe(k,l) pour chaque bloc,
   - une étape de processus de désembrouillage (EB$^{-1}$), correspondant à la transformation inverse du processus d'embrouillage (EB), permettant d'obtenir pour chaque bloc d'analyse de NxN coefficients TCD embrouillés Xe(k,l), un bloc de coefficients TCD de référence Xr(k,l), représentatifs d'un bloc désembrouillé,
   - une étape de traitement par transformée en cosinus discrète TCD$^{-1}$ permettant d'obtenir pour chaque bloc de coefficient TCD Xr(k,l), une distribution désembrouillée des composantes de luminance et/ou de chrominance du bloc correspondant des NxN pixels xr(i,j),
   - une étape de formation du multiplex numérique de données d'image de référence désembrouillées à partir des blocs de NxN pixels xr(i,j) désembrouillés.

9. Procédé selon la revendication 1 ou 6, caractérisé en ce que dans le cas où l'embrouillage-désembrouillage est appliqué aux blocs de pixels, les processus d'embrouillage (eb) et de désembrouillage (eb$^{-1}$), sont appliqués directement aux blocs de pixels non embrouillés dits de référence xr(i,j) respectivement pixels embrouillés xe(i,j).

10. Dispositif d'embrouillage-désembrouillage de données multiplexées d'images de télévision numérique, ces données devant être soumises à un traitement de compression afin d'assurer leur transmission, caractérisé en ce que ledit dispositif, afin d'assurer l'embrouillage, comprend :
   - des moyens démultiplexeurs permettant d'extraire les composantes de luminance, de chrominance des pixels constitutifs de l'image et les données non soumises au processus d'embrouillage-désembrouillage,
   - des premier et deuxième moyens de mémorisation par blocs de NxN pixels des composantes de luminance et de chrominance, de façon à engendrer un découpage spatial correspondant de l'image, lesdits blocs b(I,J) de pixels étant mémorisés à des adresses I,J correspondantes où I désigne un indice de ligne et J un indice de colonne d'arrangement des blocs dans l'image,
   - d'un troisième moyen de mémorisation des données non soumises au processus d'embrouillage-désembrouillage,
   - des moyens de brassage desdits pixels x(i,j) de chaque bloc b(I,J), ce brassage étant réalisé par brassage inter et/ou intra-blocs, pour obtenir un arrangement embrouillé de blocs de pixels,
   - des moyens multiplexeurs permettant à partir des blocs de pixels embrouillés de reconstituer un multiplex d'images embrouillées.

11. Dispositif selon la revendication 10, caractérisé en ce que les premiers et deuxièmes moyens de mémorisation des composantes de luminance respectivement de chrominance, comportent :
   - une première mémoire vive d'octets, destinée à mémoriser les composantes de luminance desdits blocs de NxN pixels,
   - un séquenceur d'adressage en lecture de ladite première mémoire vive,
   - une deuxième mémoire vive d'octets, destinée à mémoriser les composantes de chrominance desdits blocs de NxN pixels,
- un séquenceur d'adressage en lecture de ladite deuxième mémoire vive,
- un séquenceur d'adressage en écriture des dites première et deuxième mémoires vives.

12. Dispositif selon la revendication 11, caractérisé en ce que le séquenceur d'adressage en lecture de ladite première respectivement deuxième mémoire vive, comporte :
- un premier circuit de décalage d'adresse des blocs de pixels permettant d'assurer un embrouillage inter-blocs,
- un deuxième circuit de décalage d'adresse de pixels permettant d'assurer un embrouillage intra-bloc des NxN pixels de chaque bloc,
- un circuit commun générateur d'adresse recevant les adresses de décalage de blocs et de décalage de pixels, et délivrant une adresse de lecture à la première respectivement deuxième mémoire vive.

13. Dispositif selon les revendications 10, 11 et 12 caractérisé en ce que, en vue de l'embrouillage de coefficients TCD représentatifs d'images numériques, le démultiplexeur est suivi d'un processeur de TCD muni d'une mémoire tampon sur chaque voie de luminance respectivement de chrominance, les coefficients TCD correspondants de luminance notés TCD Y respectivement de chrominance notés TCD Cb, Cr étant transmis selon une séquence de transmission semblable à la séquence de transmission des composantes de luminance respectivement de chrominance des pixels, le multiplexeur étant précédé sur chaque voie, de luminance respectivement de chrominance, par un processeur de TCD inverse muni d'une mémoire tampon, cette mémoire tampon permettant de mémoriser les coefficients de luminance respectivement de chrominance TCD embrouillés notés ETCDY et ETCD Cr, Cb, lesdits séquenceurs d'adresse étant adaptés de façon à délivrer en outre un bit de changement de signe des coefficients TCD, chacune des voies de luminance respectivement de chrominance comportant respectivement un circuit de changement de signe des coefficients TCD disposés en amont desdits processeurs TCD inverse et recevant ledit bit de changement de signe desdits séquenceurs d'adresses respectivement.

14. Utilisation du procédé et du dispositif d'embrouillage-désembrouillage selon l'une des revendications précédentes pour le contrôle d'accès d'utilisateurs à des programmes télévisés ou à des images fixes diffusés, transmis, ou stockés après embrouillage correspondant.

**Patentansprüche**

1. Verfahren zur Verwürfelung-Entwürfelung von digitalen Bilddaten, dadurch gekennzeichnet, daß es zum Durchführen der Verwürfelung umfaßt:
   a) die Daten werden einer Verarbeitung zum Gewinnen der kolorimetrischen Komponenten der das Bild zusammensetzenden Pixel unterzogen,
   b) die Komponenten werden in Blöcke b(I,J) von NxN Pixeln x(i,j) in einer eine entsprechende räumliche Unterteilung des Bilds erzeugenden Weise gesetzt, wobei I einen Zeilenindex und J einen Spaltenindex der Anordnung der Blöcke in dem Bild bezeichnet und i einen Zeilenindex und j einen Spaltenindex der Anordnung der Pixel in jedem Block bezeichnet,
   c) die Pixel und/oder Blöcke werden einem Intra- und/oder Inter-Block-Vermischungsvorgang unterzogen, wobei die Inter-Block-Vermischung eine beliebige Umordnung der Pixelblöcke umfaßt und die Intra-Block-Vermischung eine beliebige Umordnung der Pixel jedes Blocks umfaßt, um eine verwürfelte Anordnung der Blöcke und/oder der Pixel zu erhalten, wobei die Entwürfelung durch Rücktransformation des Verwürfelungsvorgangs in bezug auf die beim Vermischungsvorgang durchgeführte, beliebige Umordnung der Pixelblöcke und der Pixel bewirkt wird.

2. Verfahren nach Anspruch 1, dadurch gekennzeichnet, daß es zum Durchführen der Verwürfelung vor dem Schritt c) des Vermischungsvorgangs umfaßt
   a) jeder Block wird bezüglich jeder der Komponenten einer Verarbeitung mit diskreter Kosinustransformierter TCD unterzogen, derart, daß entsprechende Blöcke von TCD-Koeffizienten X(k,l) erhalten werden, wobei k einen Zeilenindex und l einen Spaltenindex der TCD-Koeffizienten in den Blöcken der entsprechenden NxN TCD-Koeffizienten bezeichnet,
   b) der Inter- und/oder Intra-Block-Vermischungsvorgang wird auf die und/oder in den Blöcken der TCD-Koeffizienten X(k,l) nach dem Vorgang der Verarbeitung mit diskreter Kosinustransformierter durchgeführt.

3. Verfahren nach Anspruch 2, dadurch gekennzeichnet, daß der Inter- und/oder Intra-Block-Vermischungsvorgang auf die und/oder in den Blöcken der Pixel x(i,j) vor dem Vorgang der Verarbeitung mit diskreter Kosinustransformierter durchgeführt wird.

4. Verfahren nach einem der Ansprüche 2 oder 3, dadurch gekennzeichnet, daß der Inter- und/oder Intra-Block-Vermischungsvorgang TCD das Ändern entweder des Vorzeichens der TCD-Koeffizienten X(k,l) oder der absoluten Inter- und/oder Intrablockadressen der TCD-Koeffizienten umfaßt, wobei die Amplitude dieser Koeffizienten X(k,l) beibehalten wird.

5. Verfahren nach einem der vorhergehenden Ansprüche, dadurch gekennzeichnet, daß die Verwürfelung durch eine sequentielle Kombination aufeinanderfolgender Schritte erreicht wird, welche die Aufeinanderfolge der Schritte der diskreten Kosinustransformation und der Vermischung nach den Ansprüchen 1 und 2 umfaßt, wobei die aufeinanderfolgenden Schritte auf unterschiedliche Blöcke angewandt werden.

6. Verfahren nach einem der Ansprüche 1 oder 2, dadurch gekennzeichnet, daß in dem Fall, in dem die Bilddaten von multiplexierten Bilddaten des digitalen Fernsehens gebildet sind, der Intra-Block-Verwürfelungsvorgang eine Umkehrung der Luminanz- und/oder Chrominanzkomponenten der Pixel des laufenden Pixelblocks umfaßt.

7. Verfahren nach einem der Ansprüche 2 oder 4, dadurch gekennzeichnet, daß im Hinblick auf das Senden der Bilder des digitalen Fernsehens das Verfahren bei der Ausstrahlung nach Bildung der NxN-Pixel-Analyseblöcke umfaßt
   - einen Schritt der Verarbeitung mit diskreter Kosinustransformierter der Luminanz- und/oder Chrominanzkomponenten der NxN Pixel xr(i,j) jedes Blocks b(I,J), welcher es gestattet, NxN TCD-Koeffizienten Xr(k,l) für jeden entsprechenden Analyseblock zu erhalten,
   - einen Verwürfelungsschritt (EB), welcher es gestattet, für jeden Analyseblock von NxN TCD-Koeffizienten Xr(k,l) einen Block verwürfelter TCD-Koeffizienten Xe(k,l) zu erhalten,
   - einen Schritt der Verarbeitung mit inverser diskreter Kosinustransformierter $TCD^{-1}$ der verwürfelten TCD-Koeffizienten Xe(k,l), welcher es gestattet, für jeden Analyseblock eine verwürfelte Verteilung der Blöcke der Pixel xe(i,j) zu erhalten,
   - einen Schritt der Bildung des Digitalmultiplex des zu sendenden, verwürfelten Bildes.

8. Verfahren nach Anspruch 7, dadurch gekennzeichnet, daß im Hinblick auf das Senden von Bildern des digitalen Fernsehens das Verfahren beim Empfang nach einer Verarbeitung zur Bildung der Analyseblöcke von NxN Pixeln xe(i,j) verwürfelter Bilder umfaßt
   - einen Schritt der Verarbeitung mit diskreter Kosinustransformierter TCD der Chrominanz- und der Luminanzkomponenten der NxN Pixel jedes verwürfelten Blocks, welcher es gestattet, für jeden Block NxN verwürfelte TCD-Koeffizienten Xe(k,l) zu erhalten,
   - einen der Rücktransformation des Verwürfelungsvorgangs (EB) entsprechenden Entwürfelungs-schritt ($EB^{-1}$), welcher es gestattet, für jeden Analyseblock von NxN verwürfelten TCD-Koeffizienten Xe(k,l) einen Block Referenz-TCD-Koeffizienten Xr(k,l) zu erhalten, welche einen entwürfelten Block repräsentieren,
   - einen Schritt der Verarbeitung mit diskreter Kosinustransformierter $TCD^{-1}$, welcher es gestattet, für jeden Block von TCD-Koeffizienten Xr(k,l) eine entwürfelte Verteilung der Luminanz- und/oder Chrominanzkomponenten des entsprechenden Blocks der NxN Pixel xr(i,j) zu erhalten,
   - einen Schritt zur Bildung des Digitalmultiplex der entwürfelten Daten des Referenzbildes aus den Blöcken der NxN entwürfelten Pixel xr(i,j).

9. Verfahren nach Anspruch 1 oder 6, dadurch gekennzeichnet, daß in dem Fall, in dem die Verwürfelung-Entwürfelung auf die Pixelblöcke angewandt wird, der Verwürfelungsvorgang (eb) und der Entwürfe-lungsvorgang ($eb^{-1}$) direkt auf die Blöcke von nicht verwürfelten, sogenannten Referenzpixeln xr(i,j) bzw. verwürfelten Pixeln xe(i,j) angewandt werden.

10. Vorrichtung zur Verwürfelung-Entwürfelung von multiplexierten Daten von Bildern des digitalen Fernsehens, wobei diese Daten zur Gewährleistung ihrer Übertragung einer Komprimierungsbehandlung zu unterziehen sind, dadurch gekennzeichnet, daß die Vorrichtung zum Durchführen der Verwürfelung umfaßt:
   - Demultiplexermittel, welche das Gewinnen der Luminanz- und Chrominanzkomponenten der das Bild zusammensetzenden Pixel und der nicht dem Verwürfelungs-Entwürfelungsvorgang unterzogenen Daten ermöglichen,

- ein erstes und ein zweites Mittel zur blockweisen Speicherung von NxN Pixeln der Luminanz- und Chrominanzkomponenten in einer eine entsprechende räumliche Unterteilung des Bildes erzeugenden Weise, wobei die Blöcke b(I,J) der Pixel bei den entsprechenden Adressen I,J gespeichert sind, wobei I einen Zeilenindex und J einen Spaltenindex der Anordnung der Blöcke in dem Bild bezeichnet,
- ein drittes Mittel zur Speicherung der nicht dem Verwürfelungs-Entwürfelungsvorgang unterzogenen Daten,
- Mittel zur Vermischung der Pixel x(i,j) jedes Blocks b(I,J), wobei diese Vermischung durch eine Inter- und/oder Intra-Block-Vermischung zum Erhalten einer verwürfelten Anordnung der Pixelblöcke realisiert ist,
- Multiplexermittel zur Rekonstruktion eines Multiplex von verwürfelten Bildern aus verwürfelten Pixelblöcken.

11. Vorrichtung nach Anspruch 10, dadurch gekennzeichnet, daß das erste und das zweite Mittel zur Speicherung der Luminanz- bzw. Chrominanzkomponenten umfassen:
- einen ersten 8-Bit-Arbeitsspeicher, welcher dazu bestimmt ist, die Luminanzkomponenten der Blöcke der NxN Pixel zu speichern,
- eine Leseadressierungsabfolgesteuerung des ersten Arbeitsspeichers,
- einen zweiten 8-Bit-Arbeitsspeicher, welcher dazu bestimmt ist, die Chrominanzkomponenten der Blöcke der NxN Pixel zu speichern,
- eine Leseadressierungsabfolgesteuerung des zweiten Arbeitsspeichers,
- eine Schreibadressierungsabfolgesteuerung des ersten und des zweiten Arbeitsspeichers.

12. Vorrichtung nach Anspruch 11, dadurch gekennzeichnet, daß die Leseadressierungsabfolgesteuerung des ersten bzw. des zweiten Arbeitsspeichers umfaßt:
- eine erste Schaltung zur Verschiebung der Adresse der Pixelblöcke, welche das Durchführen einer Inter-Block-Vermischung gestattet,
- eine zweite Schaltung zur Verschiebung der Adresse der Pixel, welche das Durchführen einer Intra-Block-Vermischung der NxN Pixel jedes Blocks gestattet,
- eine gemeinsame Adreßgeneratorschaltung, welche die Adressen der Verschiebung der Blöcke und der Verschiebung der Pixel aufnimmt und dem ersten bzw. dem zweiten Arbeitsspeicher eine Leseadresse zuführt.

13. Vorrichtung nach den Ansprüchen 10, 11 und 12, dadurch gekennzeichnet, daß der Demultiplexer im Hinblick auf die Verwürfelung der die digitalen Bilder darstellenden TCD-Koeffizienten von einem TCD-Prozessor gefolgt ist, welcher einen Pufferspeicher auf jedem Luminanz- bzw. Chrominanzkanal umfaßt, wobei die entsprechenden Luminanz-TCD-Koeffizienten, bezeichnet mit TCD Y, bzw. die Chrominanz-TCD-Koeffizienten, bezeichnet mit TCD Cb, Cr, gemäß einer Übertragungssequenz übertragen werden, welche der Übertragungssequenz der Luminanz- bzw. Chrominanzkomponenten der Pixel ähnelt, wobei vor dem Multiplexer in jedem Luminanz- bzw. Chrominanzkanal ein einen Pufferspeicher aufweisender Prozessor zur inversen TCD angeordnet ist, wobei dieser Pufferspeicher das Speichern der verwürfelten Luminanz- bzw. Chrominanz-TCD-Koeffizienten, bezeichnet mit ETCDY und ETCD Cr, Cb, ermöglicht, wobei die Adressierungsabfolgesteuerungen dazu eingerichtet sind, daß sie ferner ein Bit des Vorzeichenwechsels der TCD-Koeffizienten liefern, wobei jeder der Luminanz- bzw. Chrominanzkanäle eine Schaltung zur Änderung des Vorzeichens der TCD-Koeffizienten umfaßt, welche vor den Prozessoren zur inversen TCD angeordnet ist und das Bit des Vorzeichenwechsels der jeweiligen Adreßabfolgesteuerungen aufnimmt.

14. Verwendung des Verfahrens und der Vorrichtung zur Verwürfelung-Entwürfelung gemäß einem der vorhergehenden Ansprüche für die Steuerung des Zugangs von Nutzern zu Fernsehprogrammen oder zu festen Bildern, welche nach entsprechender Verwürfelung gesendet, übertragen oder gespeichert werden.

## Claims

1. Method for scrambling-descrambling digital image data, said method for scrambling consisting :
   a) in subjecting said data to processing for extracting the colorimetric components of the pixels forming the image,

b) in forming said components into blocks b(I,J) of NxN pixels x(i,j), so as to generate corresponding spatial chopping of the image, where I designates a left to right line index and J a top to bottom column index of arrangement of the blocks in the image and i designates a line index and j column index of arrangement of the pixels in each block,

c) then subjecting said pixels and/or block to an intra- and/or inter-block mixing procedure, said inter-block mixing consisting in an arbitrary re-arrangement of said blocks of pixels and said intra-block mixing consisting in an arbitrary re-arrangement of the pixels of each block so as to obtain a scrambled arrangement of blocks and/or of pixels, descrambling being effected through inverse scrambling transformation with respect to arbitrary re-arrangement of pixels and pixels blocks performed during mixing procedure.

2. The method as claimed in claim 1, said method for scrambling consisting prior to the mixing procedure step c) :

a) in subjecting each block relative to each of the colorimetric components to discrete cosine transform DCT processing so as to obtain corresponding blocks of DCT coefficients X(k,l), where k designates a line index and 1 a column index of the DCT coefficients in the blocks of NxN corresponding DCT coefficients,

b) in carrying out said inter-block and/or intra-block mixing procedure on and/or in said blocks of DCT coefficients X(k,l) subsequent to the discrete cosine transform processing procedure.

3. The method as claimed in claim 2, wherein said inter-block and/or intra-block mixing procedure is carried out on and/or in said blocks of pixels x(i,j) prior to the discrete cosine transform processing procedure.

4. The method as claimed in one of claims 2 or 3, wherein said DCT inter-block and/or intra-block mixing procedure consists in modifying either the sign of the DCT coefficients X(k,l) or the DCT coefficient inter-block and/or intra-block absolute address, the amplitude of these coefficients X(k,l) being maintained.

5. The method as claimed in one of the preceding claims, wherein scrambling is obtained by a sequential combination of successive steps comprising the succession of the discrete cosine transformation and mixing steps of claims 1 and 2, the successive steps being applied to the different blocks.

6. Method as claimed in one claim of preceding claims 1 or 2, wherein, in case said image data is formed by multiplexed digital television image data, said intra-block scrambling procedure consists in an inversion of the luminance and/or chrominance components of the pixels of the current pixel block.

7. The method as claimed in one of claims 2 or 4, wherein for broadcasting digital television images, said method comprises at emission, following processing for forming analysis blocks of NxN pixels,
   - a step for discrete cosine transform processing of the luminance and/or chrominance components of the NxN pixels xr(i,j) of each block b(I,J) so as to obtain NxN DCT coefficients Xr(k,l) for each corresponding analysis block,
   - a scrambling procedure step (EB) for obtaining for each analysis block of NxN DCT coefficients Xr(k,l) a block of scrambled DCT coefficients Xe(k,l),
   - a step for inverse discrete cosine transform DCT$^{-1}$ processing of the scrambled DCT coefficients Xe(k,l) for obtaining for each analysis block a scrambled distribution of blocks of pixels xe(i,j),
   - a processing step for forming the digital scram-bled image multiplex for broadcasting.

8. The method as claimed in claim 7, wherein, for broadcasting digital television images, said method comprises at reception, following processing for forming the analysis blocks of NxN pixels xe(i,j) of scrambled images,
   - a step for processing by discrete cosine transformation DCT of the chrominance and luminance components of the NxN pixels of each scrambled block, so as to obtain NxN scrambled DCT coefficients Xe(k,l) for each block,
   - a descrambling procedure step (EB$^{-1}$), corresponding to the inverse transformation of the scrambling procedure (EB) so as to obtain for each analysis block of NxN scram-bled DCT coefficients Xe(k,l), a block of DCT reference coefficients Xr(k,l), representative of a descrambled block,
   - a step for processing by discrete cosine transform DCT$^{-1}$ for obtaining for each block of DCT coefficients Xr(k,l), a descrambled distribution of the luminance and/or chrominance components of the corresponding block of the NxN pixels xr(i,j),

19

- a step for forming the digital multiplex of descrambled reference image data from the blocks of NxN descrambled pixels xr(i,j).

9. The method as claimed in claim 1 or 6, wherein, in case scrambling-descrambling is applied to the blocks of pixels, the scrambling (eb) and the descrambling (eb$^{-1}$) procedures are applied directly to the blocks of reference pixels xr(i,j) respectively scrambled pixels xe(i,j).

10. A device for scrambling-descrambling multiplexed digital television image data, this data being subjected to compression processing for transmission thereof, in which said device for scrambling comprises :
   - demultiplexing means for extracting the luminance and chrominance components of the pixels forming the image and the data not subjected to the scrambling-descrambling procedure,
   - first and second means for storing in blocks pixels of the luminance and chrominance components so as to generate corresponding spatial chopping of the image, said blocks b(i,j) of pixels being stored at corresponding addresses I, J where I designates a line index and J a column index of arrangement of the blocks in the image,
   - a third means for storing the data not subjected to the scrambling-descrambling procedure,
   - means for mixing said pixels x(i,j) of each block b(I,J), this mixing being achieved by inter-blocks and/or intra-blocks mixing so as to obtain a scrambled arrangement of blocks of pixels,
   - multiplexer means for generating a scrambled images multiplex from said scrambled blocks of pixels.

11. The device as claimed in claim 10, wherein the first and second means for storing the luminance respectively chrominance components comprise :
   - a first byte RAM for storing the luminance components of said blocks of NxN pixels,
   - a read addressing sequencer for said first byte RAM,
   - a second byte RAM for storing the chrominance components of said blocks of NxN pixels,
   - a read addressing sequencer for said second byte RAM,
   - a write addressing sequencer for said first and second RAMs.

12. The device as claimed in claim 11, wherein said read address sequencer for said first respectively second RAM comprises :
   - a first circuit for shifting the address of the blocks of pixels for providing inter-block scrambling,
   - a second circuit for shifting the address of pixels for providing intra-block scrambling of the NxN pixels of each block,
   - a common address generator circuit receiving the block shift and pixel shift addresses and delivering a read address to the first respectively second RAM.

13. The device as claimed in claims 10, 11 and 12, wherein, for scrambling the DCT coefficients representative of digital images, the demultiplexer is followed by a DCT processor having a buffer memory in each luminance respectively chrominance channel, the corresponding DCT coefficients of luminance referenced DCTY respectively of chrominance referenced DCT Cb, Cr being transmitted in a transmission sequence similar to the sequence for transmitting the luminance respectively chrominance components of the pixels, the multiplexer being preceded in each luminance respectively chrominance channel by an inverse DCT processor having a buffer memory, this buffer memory storing the scrambled DCT luminance respectively chrominance coefficients referenced EDCTY and EDCT Cr Cb, said address sequences being adapted for further delivering a bit for changing the sign of the DCT coefficients, each of the luminance respectively chrominance channels comprising respectively a circuit for changing the sign of the DCT coefficients disposed upstream of said inverse DCT processors and receiving said sign change bit from said address sequencers.

14. Use of the scrambling-descrambling method and device as claimed in one of the preceding claims for controlling the access of users to televised programs or to fixed images broadcast, transmitted or stored after corresponding scrambling.

MULTIPLEX DES DONNÉES
NUMERIQUES D'IMAGES

```
┌──────────────────┐        A, A'
│ DEMULTIPLEXAGE   │
│                  │
│ ET FORMATION     │  x(i,j)   ┌──────────────┐ X(k,l)  ┌──────────────┐        ┌──────────┐
│ DES BLOCS        │─────────→ │TRANSFORMATION│────────→│QUANTIFICATION│───────→│ CODAGE   │──────→
│ D'ANALYSE        │           │     TCD      │         │              │        │          │
│ N x N PIXELS     │           └──────────────┘         └──────────────┘        └──────────┘
└──────────────────┘                  B                        C                     D
```

FIG.1a. (ART ANTERIEUR)

```
        D⁻¹                    A'                      B⁻¹                       A⁻¹
   ┌──────────┐        ┌──────────────┐ X(k,l) ┌──────────────┐ x(i,j) ┌──────────────────┐
   │          │        │ CONSTRUCTION │───────→│TRANSFORMATION│───────→│ FORMATION DU     │   MUTIPLEX DES DONNÉES
──→│ DECODAGE │───────→│ DES BLOCS TCD│        │ INVERSE TCD  │        │ MULTIPLEX        │── NUMERIQUES D'IMAGES →
   │          │        │              │        │              │        │ NUMERIQUE        │
   └──────────┘        └──────────────┘        └──────────────┘        │ D IMAGE A PARTIR │
                                                                       │ DES BLOCS        │
                                                                       │ N x N PIXELS     │
                                                                       └──────────────────┘
```

FIG.1b. (ART ANTERIEUR)

EP 0 454 556 B1

# FIG.2.

DOMAINE PIXELS

DOMAINE TCD

MULTIPLEX DES DONNÉES
NUMÉRIQUES D'IMAGES
DE RÉFÉRENCE

DEMULTIPLEXAGE
ET FORMATION DES
BLOCS D'ANALYSE
N x N PIXELS

A, A'

$x_r(i,j)$

eb

TRAITEMENT
D'EMBROUILLAGE
SUR LES BLOCS
N x N PIXELS

MULTIPLEX DES DONNÉES
NUMÉRIQUES D'IMAGES
EMBROUILLÉES

FORMATION DU
MULTIPLEX
NUMÉRIQUE
D'IMAGE A PARTIR
DES BLOCS
N x N PIXELS

$A^{-1}$

$x_e(i,j)$

## FIG.3a.

PROCESSUS D'EMBOUILLAGE

MULTIPLEX DES DONNÉES
NUMÉRIQUES D'IMAGES
EMBROUILLÉES

DEMULTIPLEXAGE
ET FORMATION DES
BLOCS D'ANALYSE
N x N PIXELS

A, A'

$eb^{-1}$

$x_e(i,j)$

TRAITEMENT
DE DÉSEMBROUILLAGE
DES BLOCS
N x N PIXELS

MULTIPLEX DES DONNÉES
NUMÉRIQUES D'IMAGES
DE REFERENCE

FORMATION DU
MULTIPLEX
NUMÉRIQUE
D'IMAGE A PARTIR
DES BLOCS
N x N PIXELS

$A^{-1}$

$x_r(i,j)$

## FIG.3b.

PROCESSUS DE DÉSEMBROUILLAGE

**FIG.4a.**

MULTIPLEX DES DONNÉES NUMÉRIQUES D'IMAGES DE RÉFÉRENCE → | DÉMULTIPLEXAGE ET FORMATION DE BLOCS D'ANALYSE NxN PIXELS | —A, A' → $x_r(i,j)$ → [ TCD ] B → $X_r(k,l)$ → EB → | TRAITEMENT D'EMBROUILLAGE SUR LES BLOCS TCD NxN COEFFICIENTS |

MULTIPLEX DES DONNÉES NUMÉRIQUES D'IMAGES EMBROUILLÉES ← | FORMATION DU MULTIPLEX NUMÉRIQUE D'IMAGE A PARTIR DES BLOCS NxN PIXELS | $A^{-1}$ ← $x_e(i,j)$ ← [ TCD INVERSE ] $B^{-1}$ ← $X_e(k,l)$

PROCESSUS D EMBROUILLAGE

**FIG.4b.**

MULTIPLEX DES DONNÉES NUMÉRIQUES D'IMAGES EMBROUILLÉES → | DÉMUTIPLEXAGE ET FORMATION DES BLOCS D'ANALYSE NxN PIXELS | —A, A' → $x_e(i,j)$ → [ TCD ] B → $X_e(k,l)$ → $EB^{-1}$ → | TRAITEMENT DE DÉSEMBROUILLAGE SUR LES BLOCS TCD NxN COEFFICIENTS |

MULTIPLEX DES DONNÉES NUMÉRIQUES D'IMAGES DE RÉFÉRENCE ← | FORMATION DU MULTIPLEX NUMÉRIQUE D'IMAGE A PARTIR DES BLOCS NxN PIXELS | $A^{-1}$ ← $x_r(i,j)$ ← [ TCD INVERSE ] $B^{-1}$ ← $X_r(k,l)$

PROCESSUS DE DÉSEMBROUILLAGE

| EMBROUILLAGE DES BLOCS NxN PIXELS (eb) | | EMBROUILLAGE EQUIVALENT DES BLOCS TCD NxN (EB) | DESEMBROUILLAGE EQUIVALENT DES BLOCS TCD NxN (EB$^{-1}$) | DÉSEMBROUILLAGE DES BLOCS (eb$^{-1}$) NxN PIXELS | |
|---|---|---|---|---|---|
| TRANSFORMATION | $x_e(i,j)$ | $X_e(k,l)$ | $X_r(k,l)$ | TRANSFORMATION | $x_r(i,j)$ |
| IDENTITÉ | $x_r(i,j)$ | $X_r(k,l)$ | $X_e(k,l)$ | IDENTITÉ | $x_e(i,j)$ |
| MIROIR VERTICAL | $x_r(N-1-i,j)$ | $(-1)^k X_r(k,l)$ | $(-1)^k X_e(k,l)$ | MIROIR VERTICAL | $x_e(N-1-i,j)$ |
| MIROIR HORIZONTAL | $x_r(i,N-1-j)$ | $(-1)^l X_r(k,l)$ | $(-1)^l X_e(k,l)$ | MIROIR HORIZONTAL | $x_e(i,N-1-j)$ |
| MIROIR DIAGONALE $\frac{\pi}{4}$ | $x_r(N-1-j,N-1-i)$ | $(-1)^k(-1)^l X_r(l,k)$ | $(-1)^k(-1)^l X_e(l,k)$ | MIROIR DIAGONALE $\frac{\pi}{4}$ | $x_e(N-1-j,N-1-i)$ |
| MIROIR DIAGONALE $\frac{3\pi}{4}$ | $x_r(j,i)$ | $X_r(l,k)$ | $X_e(l,k)$ | MIROIR DIAGONALE $\frac{3\pi}{4}$ | $x_e(j,i)$ |
| ROTATION $\frac{\pi}{2}$ | $x_r(N-1-j,i)$ | $(-1)^k X_r(l,k)$ | $(-1)^l X_e(l,k)$ | ROTATION $\frac{3\pi}{2}$ | $x_e(j,N-1-i)$ |
| ROTATION $\pi$ | $x_r(N-1-i,N-1-j)$ | $(-1)^k(-1)^l X_r(k,l)$ | $(-1)^k(-1)^l X_e(k,l)$ | ROTATION $\pi$ | $x_e(N-1-i,N-1-j)$ |
| ROTATION $\frac{3\pi}{2}$ | $x_r(j,N-1-i)$ | $(-1)^l X_r(l,k)$ | $(-1)^k X_e(l,k)$ | ROTATION $\frac{\pi}{2}$ | $x_e(N-1-j,i)$ |

FIG.5.

EP 0 454 556 B1

FIG.6a.

FIG.6b.

EP 0 454 556 B1

FIG.7